(19) Europäisches Patentamt
European Patent Office
Office européen des brevets

(11) Veröffentlichungsnummer: **0 096 660**
**B1**

(12) # EUROPÄISCHE PATENTSCHRIFT

(45) Veröffentlichungstag der Patentschrift: **11.12.85**

(51) Int. Cl.[4]: **C 07 F 7/18, A 01 N 55/00**

(21) Anmeldenummer: **83810235.8**

(22) Anmeldetag: **03.06.83**

(54) **Neue Mikrobizide, Verfahren zu ihrer Herstellung und ihre Verwendung zur Bekämpfung von Mikroorganismen.**

(30) Priorität: **09.06.82 CH 3558/82**

(43) Veröffentlichungstag der Anmeldung: **21.12.83 Patentblatt 83/51**

(45) Bekanntmachung des Hinweises auf die Patenterteilung: **11.12.85 Patentblatt 85/50**

(84) Benannte Vertragsstaaten: **AT BE CH DE FR GB IT LI NL SE**

(56) Entgegenhaltungen:
**EP-A- 0 028 363**
**EP-A- 0 031 962**
**GB-A- 2 064 520**

(73) Patentinhaber: **CIBA-GEIGY AG**
**Postfach**
**CH-4002 Basel (CH)**

(72) Erfinder: **Eckhardt, Wolfgang, Dr.**
**Breslauerstrasse 16**
**D-7850 Lörrach (DE)**
Erfinder: **Kunz, Walter, Dr.**
**Im Goldbrunnen 55**
**CH-4104 Oberwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 096 660 B1

Jouve, 18, rue St-Denis, 75001 Paris, France

**Beschreibung**

Die vorliegende Erfindung betrifft Silyloxyalkan-azole der nachstehenden Formel I sowie deren pflanzenverträgliche Säureadditionssalze, und Metallkomplexe. Sie betrifft ferner die Herstellung dieser Verbindungen sowie agrochemische Mittel, die als Wirkstoff mindestens eine der Verbindungen der Formel I enthalten ; sie betrifft auch die Herstellung der Mittel und ein Verfahren zur Bekämpfung oder präventiven Verhütung eines Befalls von Pflanzen durch Mikroorganismen.

Die erfindungsgemässen Verbindungen gehorchen der Formel I

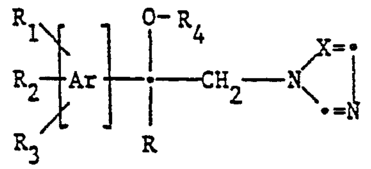

(I)

worin

X für das Brückenglied —CH= oder —N= steht ;

Ar eine Phenyl-, Diphenyl- oder Naphthylgruppe bedeutet ;

$R_1$, $R_2$, $R_3$ unabhängig voneinander für Wasserstoff, Nitro, Halogen, $C_1$-$C_3$-Alkyl, $C_1$-$C_3$-Alkoxy oder $C_1$-$C_3$-Haloalkyl stehen ;

R eine der Gruppen

—$COOR_5$, —$COSR_6$, 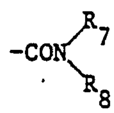

oder —CN darstellt ;

$R_5$ ein unsubstituiertes oder durch Halogen substituiertes $C_2$-$C_{10}$-Alkenyl ; ein unsubstituiertes oder durch Halogen substituiertes $C_2$-$C_{10}$-Alkinyl ; oder eine $C_3$-$C_8$-Cycloalkylgruppe oder eine unsubstituierte oder durch Halogen, $C_1$-$C_4$-Alkyl, $C_1$-$C_4$-Alkoxy, —CN oder —$CF_3$ substituierte Phenylgruppe bedeutet ; oder aber eine $C_1$-$C_{12}$-Alkylkette darstellt, die ab $C_2$-Alkyl durch Sauerstoff oder Schwefel unterbrochen und die unsubstituiert oder durch eine der folgenden Atome oder Gruppen substituiert sein kann : Halogen, Phenyl, —COOAlkyl($C_1$-$C_4$), —COPhenyl, einen ungesättigten oder gesättigten 5- oder 6-gliedrigen Ring mit Sauerstoff oder Schwefel als Heteroatom, wobei jeder Phenylrest unsubstituiert oder ein- oder mehrfach durch gleiche oder verschiedene Halogenatome substituiert ist ;

$R_6$ $C_1$-$C_{10}$-Alkyl oder eine unsubstituierte oder durch Halogen, $C_1$-$C_4$-Alkyl, $C_1$-$C_4$-Alkoxy, —CN oder —$CF_3$ substituierte Phenyl- oder Benzylgruppe bedeutet ;

$R_7$ und $R_8$ unabhängig voneinander Wasserstoff, $C_1$-$C_6$-Alkyl, $C_3$-$C_7$-Cycloalkyl oder eine Phenyl- oder Benzylgruppe darstellen, bei denen jeweils der aromatische Ring unsubstituiert oder durch Halogen, $C_1$-$C_4$-Alkyl, $C_1$-$C_4$-Alkoxy, —CN oder —$CF_3$ substituiert ist, oder wobei einer der Substituenten $R_7$ oder $R_8$ auch die Gruppe —$N(R_9)(R_{10})$ bedeutet oder wobei die Substituenten $R_7$ und $R_8$ zusammen einen 5- oder 6-gliedrigen gesättigten oder ungesättigten heterocyclischen Ring bilden, der noch 1 oder 2 weitere N-Atome enthalten kann ;

$R_9$ und $R_{10}$ unabhängig voneinander Wasserstoff, $C_1$-$C_4$-Alkyl oder einen Phenylrest bedeuten, der unsubstituiert oder durch Halogen, $C_1$-$C_4$-Alkyl, —CN oder —$CF_3$ substituiert ist ; und

$R_4$ für die Gruppe —$Si(R_{11})(R_{12})(R_{13})$ steht ; worin

$R_{11}$, $R_{12}$ und $R_{13}$ unabhängig voneinander für einen gegebenenfalls ein- oder mehrfach durch Halogen substituierten Rest aus der Gruppe $C_1$-$C_4$-Alkyl, $C_3$-$C_7$-Alkenyl oder Phenyl stehen ;

wobei deren Säureadditionssalze sowie Metallsalz komplexe eingeschlossen sind.

Unter dem Begriff Alkyl selbst oder als Bestandteil eines anderen Substituenten sind je nach Zahl der angegebenen Kohlenstoffatome beispielsweise folgende Gruppen zu verstehen : Methyl, Ethyl, Propyl, Butyl, Pentyl, Hexyl, Heptyl, Octyl, Nonyl, Decyl, Undecyl oder Dodecyl, sowie ihre Isomeren, wie z. B. Isopropyl, Isobutyl, tert.-Butyl, Isopentyl. Alkenyl steht z. B. für Vinyl, Propenyl-(1), Allyl, Butenyl-(1), Butenyl-(2), Butenyl-(3), sowie Ketten mit mehreren Doppelbindungen. Alkinyl bedeutet z. B. Propinyl-(1), Propargyl, Butinyl-(1), Butinyl-(2), bevorzugt Propargyl, durch Halogen substituiertes Alkyl steht insbesondere für einen ein- bis perhalogenierten Alkylsubstituenten, wie z. B. $CHCl_2$, $CH_2Cl$, $CH_2Cl$, $CCl_3$, $CF_3$, $CH_2CH_2Cl$ Unter Halogen soll hier und im folgenden Fluor, Chlor, Brom oder Jod, vorzugsweise Cl, Br oder F verstanden werden. Cycloalkyl steht z. B. für Cyclopropyl, Cyclobutyl, Cyclopentyl, Cyclohexyl oder Cycloheptyl, bevorzugt für Cyclopropyl und Cyclohexyl. Haloalkenyl steht für eine ein- oder mehrfach durch Halogen substituierte Alkenylgruppe, wobei als Halogen Chlor und Brom, insbesondere Chlor bevorzugt sind. Furyl steht bevorzugt für 2-Furyl, Tetrahydrofuryl bevorzugt für 2-Tetrahydrofuryl, Pyridyl bedeutet vor allem 3- oder 4-Pyridyl, Naphthyl steht für α- oder β-Naphthyl, insbesondere für α-Naphthyl. Beispiele heterocyclischer 5- bzw. 6-Ringe mit bis zu 3 N-Atomen sind Pyrazol, Imidazol, 1,2,4-Triazol und 1,3,4-Triazol, Pyridin, Pyrazin, Pyrimidin, Pyridazin, 1,3,5-Triazin und 1,2,4-Triazin.

Beispiele salzbildender Säuren sind anorganische Säuren : Halogenwasserstoffsäuren wie Fluorwasserstoffsäure, Chlorwasserstoffsäure, Bromwasserstoffsäure oder Jodwasserstoffsäure sowie Schwefelsäure, Phosphorsäure, phosphorige Säure, Salpetersäure und organische Säuren wie Essigsäure, Trifluoressigsäure, Trichloressiggsäure, Propionsäure, Glykolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure oder 2-Acetoxybenzoesäure.

Metallsalzkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten der Elemente der dritten und vierten Hauptgruppe wie Aluminium, Zinn oder Blei sowie der ersten bis achten Nebengruppe wie Chrom, Mangan, Eisen, Kobalt, Nickel, Kupfer, Zink, Silber, Quecksilber Bevorzugt sind die Nebengruppen-Elemente der 4. Periode. Die Metalle können dabei in den verschiedenen ihnen zukommenden Wertigkeiten vorliegen. Die Metallsalzkomplexe können ein- oder mehrkernig auftreten, d. h. sie können ein oder mehrere organische Molekülanteile als Liganden enthalten. Komplexsalze mit den Metallsalzen des Kupfers, Zinks, Mangans und Zinns sind bevorzugt.

Die Verbindungen der Formel i sind bei Raumtemperatur stabile Oele, Harze oder überwiegend Feststoffe, die sich durch sehr wertvolle mikrobizide Eigenschaften auszeichnen. Sie lassen sich auf dem Agrarsektor oder verwandten Gebieten präventiv und kurativ zur Bekämpfung von pflanzenschädigenden Mikroorganismen einsetzen, dabei sind die Triazolylmethylderivate im Umfang der Formel I (X bedeutet N) bevorzugt. Die erfindungsgemässen Wirkstoffe der Formel I zeichnen sich durch eine sehr gute Pflanzenverträglichkeit aus. Die Entwicklung der Pflanzen wird in keinem Stadium behindert oder verzögert.

Eine wichtige und bevorzugte Untergruppe betrifft Verbindungen der Formel I*

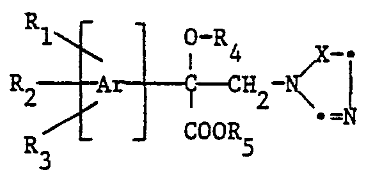

(I*),

worin

X für das Brückenglied —CH= oder —N= steht ;

Ar eine Phenyl-, Diphenyl- oder Naphthylgruppe bedeutet ;

$R_1$, $R_2$, $R_3$ unabhängig voneinander für Wasserstoff, Nitro, Halogen, $C_1$-$C_3$-Alkyl, $C_1$-$C_3$-Alkyl, $C_1$-$C_3$-Alkoxy oder $C_1$-$C_3$-Haloalkyl stehen ;

$R_5$ $C_1$-$C_4$-Alkyl, Phenyl, ein durch, Halogen oder Methyl substituiertes Phenyl oder Benzyl bedeutet ;

$R_4$ für die Gruppe —$Si(R_{11})(R_{12})(R_{13})$ steht, worin $R_{11}$, $R_{12}$ und $R_{13}$ unabhängig voneinander für einen gegebenenfalls ein- oder mehrfach durch Halogen substituierten Rest aus der Gruppe $C_1$-$C_4$-Alkyl, $C_3$-$C_7$-Alkenyl oder Phenyl stehen ;

unter Einschluss der pflanzenverträglichen Säureadditionsalze sowie Metallkomplexe.

Eine andere bevorzugte Untergruppe bilden Verbindungen der Formel I, worin X für das Brückenglied —CH= oder —N=steht ; Ar eine Phenylgruppe bedeutet ; $R_1$ in ortho-Position für Wasserstoff, Nitro, Halogen, $C_1$-$C_3$-Alkyl, $C_1$-$C_3$-Alkoxy oder $C_1$-$C_3$-Haloalkyl steht ; $R_2$ in para-Position für Wasserstoff, Nitro, Halogen, $C_1$-$C_3$-Alkyl, $C_1$-$C_3$-Alkoxy oder $C_1$-$C_3$-Haloalkyl steht ; $R_3$ Wasserstoff, Methyl oder Halogen bedeutet ; R eine der Gruppen

—$COOR_5$, —$COSR_6$, 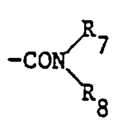

oder —CN darstellt ; $R_5$ $C_1$-$C_4$-Alkyl, Phenyl, ein durch, Halogen oder Methyl substituiertes Phenyl oder Benzyl bedeutet ; $R_6$ $C_1$-$C_{10}$-Alkyl oder eine unsubstituierte oder durch Halogen, $C_1$-$C_4$-Alkyl, $C_1$-$C_4$-Alkoxy, —CN oder —$CF_3$ substituierte Phenyl- oder Benzylgruppe bedeutet, $R_7$ und $R_8$ unabhängig voneinander für Wasserstoff, $C_1$-$C_3$-Alkyl, $C_3$-$C_7$-Cycloalkyl, Phenyl oder Benzyl stehen ; und $R_4$ für die Gruppe —$Si(R_{11})(R_{12})(R_{13})$ steht ; worin $R_{11}$, $R_{12}$ und $R_{13}$ für gegebenenfalls durch Halogen substituiertes $C_1$-$C_4$-Alkyl oder Phenyl stehen ; wobei deren Säureadditionssalze sowie Meztallsaltzkomplexe mit eingeschlossen sind. Diese Untergruppe soll hier und im folgenden mit dem Symbol I** bezeichnet werden.

Eine weitere, besonders bevorzugte Untergruppe bilden Verbindungen der Formel I, worin X für das Brückenglied —N= steht ;

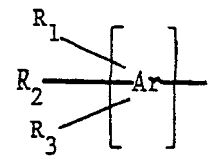

eine in ortho- und/oder para-Position durch Nitro, Fluor, Chlor, Brom, Methyl, Methoxy und/oder $CF_3$ substituierte Phenylgruppe bedeutet ; R für die Gruppe $—COOR_5$ steht ; $R_5$ $C_1$-$C_4$-Alkyl, Phenyl, ein durch, Chlor, Brom, Fluor oder Methyl substituiertes Phenyl oder Benzyl bedeutet ; und $R_4$ für die Gruppe $—Si(R_{11})(R_{12})(R_{13})$ steht ; worin $R_{11}$, $R_{12}$ und $R_{13}$ für gegebenenfalls durch Halogen substituiertes $C_1$-$C_4$-Alkyl oder Phenyl stehen ; wobei deren Säureadditionssalze sowie Metallsalzkomplexe mit eingeschlossen sind. Diese Untergruppe soll hier und im folgenden mit dem Symbol I*** bezeichnet werden.

Folgende Einzelsubstanzen sind als Mikrobizide besonders bevorzugt :

2-(1H-1,2,4-Triazolylmethyl-1'-yl)-2-trimethylsilyloxy-2-chlor-4-bromphenylessigsäureethylester ;
2-(1H-1,2,4-Triazolylmlethyl-1'-yl)-2-trimethylsilyloxy-2-chlor-4-bromphenylessigsäuremethylester ;
2-(1H-1,2,4-Triazolylmethyl-1'-yl)-2-trimethylsilyloxy-2,4-dibromphenylessigsäureethylester.
2-(1H-1,2,4-Triazolylmethyl-1'-yl)-2-trimethylsilyloxy-2,4-dichlorphenylessigsäuremethylester ;
2-(1H-1,2,4-Triazolylmethyl-1'-yl)-2-trimethylsilyloxy-2-chlor-4-bromphenylessigsäureethylester ;
2-(1H-1,2,4-Triazolylmethylsilyloxy-2-chlor-4-bromphenylessigsäuremethylester ;
2-(1H-1,2,4-Triazolylmethyl-1'-yl)-2-trimethylsilyloxy-2,4-dichlorphenylessigsäureethylester ;
2-(1H-1,2,4-Triazolylmethyl-1'-yl)-2-trimethylsilyloxy-2,4-dichlorphenylessigsäureisopropylester ;
2-(1H-1,2,4-Triazolylmethyl-1'-yl)-2-dimethyl-allylsilyloxy-2-chlor-4-bromphenylessigsäureethylester.

Die Verbindungen der Formel I werden erfindungsgemäss dadurch hergestellt, dass man einen Alkohol der Formel II

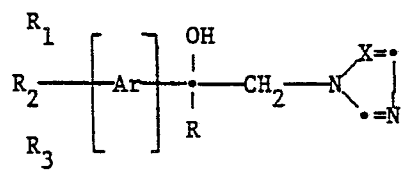

(II)

vorzugsweise in Gegenwart einer anorganischen oder insbesondere einer organischen Base bei Temperaturen von − 20° bis + 150 °C, bevorzugt 0° bis + 80 °C, in Ab- oder vorzugsweise Anwesenheit eines reaktionsinerten organischen Lösungs- oder Verdünnungsmittel mit einem Halosilan der Formel III

$$Hal—R_4 \quad \text{(III)}$$

umsetzt und, wenn erwünscht, eine verfahrensgemäss erhältliche Verbindung in ein Säureadditionssalz umwandelt, ein verfahrensgemäss erhältliches Säureadditionssalz in die « freie » Verbindung oder ein anderes Säureadditionssalz oder eine verfahrensgemäss erhältliche freie Verbindung bzw. ein verfahrensgemäss erhältliches Salz in einen Metallsalz komplex überführt. Hierbei haben die Substituenten R, $R_1$, $R_2$, $R_3$, $R_4$, X und Ar in den Formeln II und III die unter Formel I angegeben Bedeutungen, und Hal in Formel III steht für ein Halogenatom, insbesondere für Chlor oder Brom.

Für die Umsetzung geeignete Lösungsmittel sind z. B. aliphatische und aromatische Kohlenwasserstoffe wie Benzol, Toluol, Xylole, Petrolether ; halogenierte Kohlenwasserstoffe wie Chlorbenzol, Methylenchlorid, Ethylenchlorid, Chloroform, Tetrachlorkohlenstoff, Tetrachlorethylen ; Ether und etherartige Verbindungen wie Dialkylether (Diethylether, Diisopropylether, tert.-Butylmethylether), Anisol, Dioxan, Tetrahydrofuran ; Nitrile wie Acetonitril, Propionitril ; N,N-dialkyl-ierte Amide wie Dimethylformamid ; Dimethylsulfoxid ; Ketone wie Aceton, Diethylketon, Methylethylketon und Gemische solcher Lösungsmittel untereinander. In manchen Fällen kann es auch von Vorteil sein, wenn die Reaktion oder Teilschritte einer Reaktion unter Schutzgasatmosphäre und/oder absoluten Lösungsmitteln durchgeführt werden. Als Schutzgase eignen sich inerte Gase wie Stickstoff, Helium, Argon oder in gewissen Fällen auch Kohlendioxid. Ferner kann das Arbeiten unter erhöhtem Druck sich günstig auf die Ausbeute auswirken.

Geeignete anorganische Basen sind beispielsweise Oxide, Hydride, Hydroxide, Carbonate, Carbonsäuresalze und Alkoholate der Erdalkali-, bevorzugt der Alkalimetalle, insbesondere die des Natriums und Kaliums [z. B. NaH, NaOH, KOH, $Na_2CO_3$, $K_2CO_3 \cdot CaCO_3$, $CH_3COONa$, $C_2H_5COOK$, $C_1H_5ONa$, $CH_3ONa$], bevorzugt die Alkalihydride wie naH. Als organische Basen eignen sich Trialkylamine wie z. B. Triethylamin oder andere tertiäre Amine wie beispielsweise Triethylendiamin, Piperidin, Pyridin, 4-Dimethylaminopyridin, 4-Pyrrolidylpyridin.

Bei den erfindungsgemässen Herstellungsverfahren für die Endprodukte sowie bei der Herstellung der Ausgangsstufen können die anfallenden Zwischen- und End-Produkte aus dem Reaktionsmedium

isoliert und, falls gewünscht, auf eine der allgemein üblichen Methoden gereinigt werden, z. B. durch Extraktion, Kristallisation, Chromatographie, Destillation.

Reaktionsvarianten zur Herstellung der Verbindungen der Formel I sowie zur Herstellung der Zwischenprodukte, insbesondere derjenigen der Formel II, werden anschliessend in zwei Reaktionsschemata skizziert und darauffolgend im einzelnen beschrieben.

In den Formeln Ia, Ib, Ic, Id, Ie, II, III, IV, V, VI, VII, VIII, IX, X, XI, XII, XIII und XIV haben die Substituenten Ar, X, R, $R_1$, $R_2$, $R_3$,$R_4$, $R_5$, $R_6$, $R_7$ und $R_8$ die unter Formel I angegebenen Bedeutungen.

Q steht in Formel XV entweder für eine der üblichen Abgangsgruppen, z. B. Halogen, insbesondere Chlor, Brom oder Jod ; für eine Sulfonyloxygruppe, insbesondere Benzolsulfonyloxy, Paratosyloxy oder Niederalkylsolfonyloxy, bevorzugt Mesyloxy ; oder für eine Acyloxygruppe wie Trifluoracetyloxy. Q steht auch für eine Hydroxygruppe oder gemäss « Synthesis » 1979, p. 561-569, für den Rest

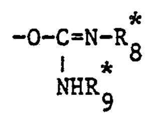 ,

worin $R_8$* und $R_9$* Organylreste, insbesondere Niederalkyl oder gegebenenfalls substituierte Phenylreste repräsentieren. M steht für Wasserstoff oder ein Metallatom, insbesondere für ein Alkalimetallatom, vorzugsweise für Natrium oder Kalium. Hal steht für Halogen, bevorzugt für Chlor oder Brom. Y bedeutet Halogen, bevorzugt Chlor oder Brom oder steht für eine Sulfat- oder Sulfonsäureestergruppe.

Das Symbol α steht stellvertretend für die Gruppierung

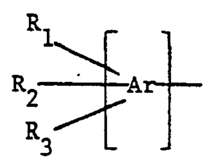

worin die Substituenten $R_1$, $R_2$, $R_3$ und Ar wie unter Formel I definiert sind.

Az repräsentiert die nachfolgende Azolylgruppe

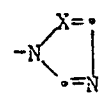

worin X für —CH= oder —N= steht.

(Siehe das Schema Seite 6 ff.)

1. Reaktionsschema

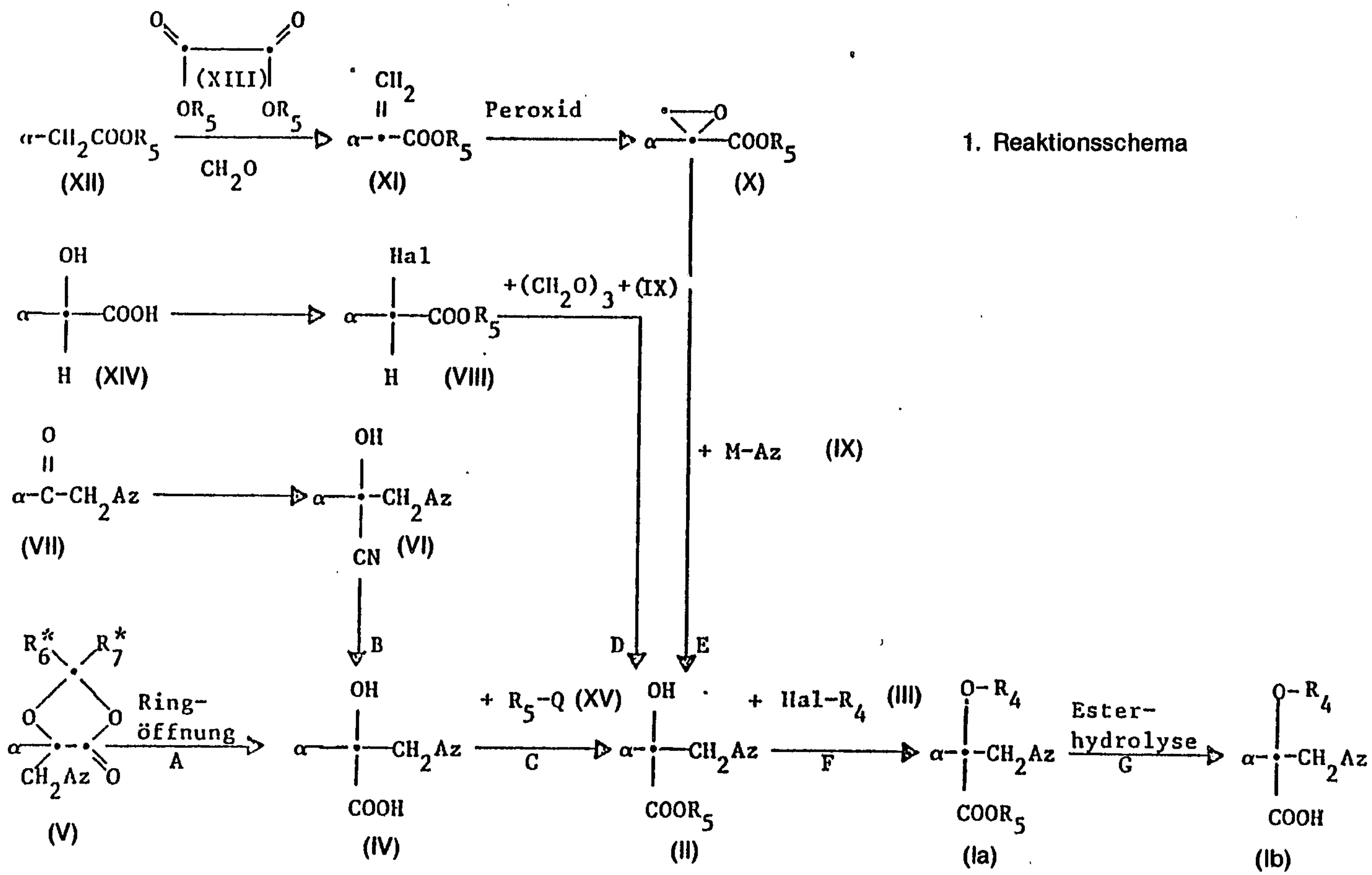

2. Reaktionsschema zur Herstellung der Thioester, Amide und Hydrazide
(α und Az sind wie im 1. Reaktionsschema definiert)

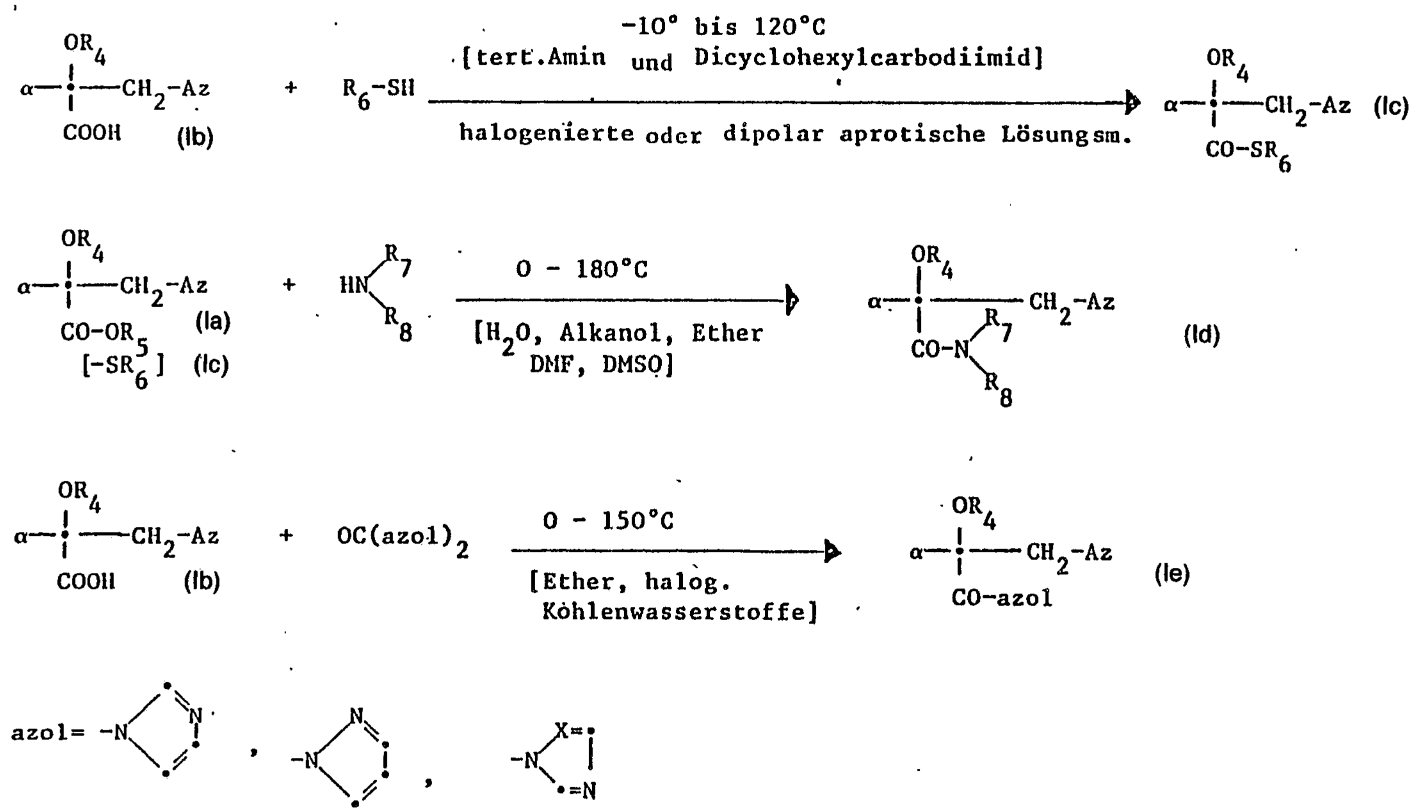

Zur Herstellung der Zwischenprodukte sowie der Endprodukte der Formel I kann man im einzelnen wie folgt vorgehen :

i) Freie α-Hydroxycarbonsäuren der Formel IV werden dadurch hergestellt, dass man wahlweise, entweder nach Gleichung A ein Dioxolanon der Formel V oder nach Gleichung B ein Cyanhydrin der Formel VI basisch oder sauer hydrolysiert.

Die Hydrolysereaktionen A und B werden mit Säuren oder Basen vorteilhafterweise in Wässrigen und/oder alkoholischen Lösungen, also in polaren Lösungsmitteln, durchgeführt. Die Reaktionen können auch in zweiphasigen Medien durchgeführt werden. Hierbei ist die Zugabe eines üblichen Phasentransfer-Katalysators vorteilhaft. Es kommen anorganische und organische Säuren in Frage, beispielsweise Mineralsäuren wie Halogenwasserstoffsäuren, Schwefelsäure, Phosphorsäure oder Sulfonsäuren (p-Toluolsulfonsäure, Methansulfonsäure). Als Basen eignen sich organische und anorganische Basen, beispielsweise Oxide, Hydride, Hydroxide, Carbonate, Carbonsäuresalze und Alkoholate der Erdalkali- und der Alkali-Metalle, insbesondere der des Natriums und Kaliums.

Die Reaktionstemperaturen liegen bei der Ringöffnungsreaktion A im allgemeinen zwischen 0° und + 140 °C, bevorzugt zwischen + 30° und + 80 °C und bei der Hydrolyse des Cyanhydrins III zwischen + 60° und + 140 °C, bevorzugt + 80° und + 120 °C oder jeweils am Siedepunkt des Lösungsmittels oder Lösungsmittelgemisches.

Ausgangsverbindungen der Formel V sind grösstenteils aus der EP-OS Nr. 44276 bekannt. Die noch neuen Verbindungen werden analog den dort angegebenen Methoden hergestellt.

Die Nitrile VI (Variante B) lassen sich auf übliche Art aus Arylazolylmethylketonen der Formel VII

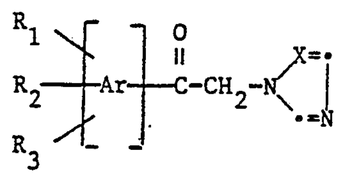

(VII)

nach Art ein Cyanohydrin-Synthese durch Reaktion mit HCN oder einem Alkalicyanid, wie z. B. KCN oder NaCN, bei 0° bis 100 °C, vorteilhafterweise in Anwesenheit einer Spur einer Base (vorzugsweise $NH_4OH$ oder gasförmigem Ammoniak) oder über das korrespondierende $NaHSO_3$-Addukt VII herstellen [Org. Syntheses Coll. Vol. I, p. 336, oder FR-PS 2 292 706 ; oder Houben-Weyl « Methoden der organischen Chemie », Band 6/3, p. 412].

Die Nitrile VI lassen sich auch gemäss J. Org. Chem. *39*, p. 914 (1974) durch Reaktion von VII mit Trimethylsilylcyanid in Gegenwart katalytischer Mengen $ZnJ_2$ und anschliessende Hydrolyse des Additionsproduktes herstellen.

Sie lassen sich auch durch Reaktion eines Ketons VII mit einem an sich bekannten Diniederalkylcyanhydrin der Formel

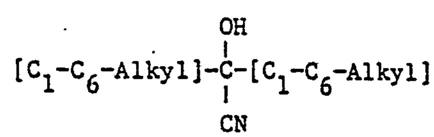

(Alkyl ist besonders Methyl, Ethyl, Propyl) bevorzugt in einem inerten Lösungsmittel oder ohne Lösungsmittel bei 50-150 °C gewinnen.

Die Hydrolyse der Nitrile VI zu Säurederivaten der Formel IV kann analog zu bekannten Methoden z. B. mit konz. Chlorwasserstoffsäure erfolgen [Houben-Weyl « Methoden der organischen Chemie », Band VIII, p. 427 ff. (1952)].

Die als Zwischenprodukte dienenden Ketone der Formel VII sind aus der DE-OS 2 431 407 bzw. der GB-PS 1 464 224 zum Teil bekannt geworden. Derartige Ketone lassen sich auch durch Hydrolyse aus entsprechenden Ketalen herstellen, z. B. aus solchen, die in einer der folgenden Publikationen genannt sind : DE-OS 2 610 022 ; 2 602 770 ; 2 930 029 ; 2 930 196 ; 2 940 133.

Noch nicht beschriebene Ketone der Formel VII lassen sich nach einer der vorstehend publizierten Methoden erhalten.

ii) Verbindungen der Formel II lassen sich gemäss Gleichung C auf übliche Art durch Veresterung des entsprechenden Säure-Derivats IV (auch in Form seines Alkalimetallsalzes) mit $R_5$-Q (XV) bei − 20° bis + 140 °C herstellen. Für diese Reaktion sind aprotische Lösungsmittel bevorzugt. Die direkte Veresterung wird vorteilhaft mit überschüssigem Alkohol $R_5$-OH bei 0° bis 80 °C in Gegenwart von Mineralsäuren oder bevorzugt von Lewis-Säuren wie Bortrifluorid-Etherat durchgeführt.

Verbindungen der Formel II lassen sich auch gemäss Gleichung D mit Paraformaldehyd bei 20° bis 140 °C, vorzugsweise 40° bis 80 °C, und a) mit dem gewünschten Azol der Formel IX (Imidazol oder Triazol) in Gegenwart einer Base (z. B. NaOH) oder b) mit einem Alkalisalz des Azols der Formel IX in wasserfreien Lösungsmitteln (z. B. Dimethylsulfoxid) herstellen. Die α-Halogenessigester VIII sind durch übliche Veresterung aus den zugrundeliegenden, an sich bekannten Säuren XIV zugänglich.

Ester der Formel II lassen sich auch gemäss Gleichung E aus Oxiranen der Formel X mit einem Azol IX (M=H oder Alkalimetall) in einem inerten, bevorzugt polaren Lösungsmittel (DMF, Acetonitril, DMSO und anderen auch in Gemischen mit Kohlenwasserstoffen) bei 20° bis 100 °C herstellen. Dabei können anorganische oder organische Basen zugesetzt werden [vgl. auch EP-OS 15756].

Wie im 1. Reaktionsschema skizziert, sind Oxirane der Formel X durch übliche Epoxidierung (z. B. $H_2O_2$(wss · NaOH, Peressigsäure) aus entsprechenden Alkenylverbindungen der Formel XI herstellbar. Verbindungen der Formel XI werden aus Arylessigsäureestern der Formel XII durch Reaktion mit Oxalsäureestern der Formel XIII und Formaldehyd in Gegenwart einer Base hergestellt [vgl. Helvetica Chimica Acta *30,* p. 1349 (1947) und DE-OS 2 653 189].

Ester der Formel II lassen sich auch aus Säuren der Formel IV und Dimethylformamidacetal (vorzugsweise im Ueberschuss), dessen Acetalkomponente den alkoholischen Teil des Esters bilden soll, in Lösungsmitteln (z. B. ein gleichartiger wasserfreier Alkohol oder aber ein Ether) bei 0° bis 160 °C herstellen [Angew. Chemie *75,* p. 296 (1963) und Helv. Chim. Acta *48,* 1747 (1965)].

iii) Die der Formel Ic entsprechenden und im 2. Reaktionsschema genannten Thioester lassen sich aus den Säuren Ib mit Thioalkoholen in Gegenwart schwacher Basen (tert. Amine) in aprotischen Lösungsitteln wie $CHCl_3$, DMF, Dichlormethan, DMSO bei − 10° bis + 120 °C, bevorzugt 0° bis 40 °C, herstellen. Aus Estern (bzw. Thioestern) der Formel Ia, c sind mit überschüssigem Amin $R_7$-NH-$R_8$ entsprechende Mandelsäure-amide und -hydrazide Id herstellbar. Sofern $R_7$ und $R_8$ zu einem 5- oder 6-gliedrigen Ring geschlossen sind, was für Verbindungen der Formel Ie zutrifft, führt man solch einen Heterocyclus vorteilhaft durch Reaktion der Säure Ib mit 1,1'-Carbonyl-di-azol oder -azin bei 0° bis 150 °C ein, vorzugsweise in Lösungsmitteln wie Ethern oder halogenierten Kohlenwasserstoffen.

iv) Die freie Hydroxylgruppe in den Verbindungen IV und II ist wie vorstehend beschrieben der Silylierung mit Halosilanen der Formel III zugänglich.

Sämtliche vorstehen unter i), ii), iii) und iv) geschilderten Herstellungsvarianten sind Teil vorliegender Erfindung.

Die übrigen Ausgangsprodukte der Formeln III, IX, XII, XIII und XV sind bekannt oder werden nach an sich bekannt oder werden nach an sich bekannten Methoden hergestellt.

Die Verbindungen der Formel I besitzen nachbarständig zur aromatischen Gruppe Ar und zu R ein Asymmetriezentrum (*)

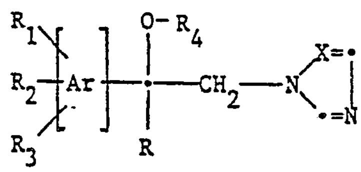

(I)

und können daher in zwei enantiomeren Formen vorliegen. Im allgemeinen entsteht bei der Herstellung dieser Substanzen ein Gemisch beider Enantiomeren, dieses lässt sich auf übliche Weise in die optischen Antipoden aufspalten. Optisch reine Antipoden erhält man beisielsweise nach Variante B. Hierbei wird das Racemat der Formel IV z. B. mit einer optisch aktiven Base in die entsprechenden Salze übergeführt und diese durch fraktionierte Kristallisation getrennt und daraus die optisch reinen Säuren der Formel IV freigesetzt. Diese können wie unter Variante C in die optisch reinen Ester der Formel II übergeführt werden und letztere wie unter Variante F in die silylierten Ester Ia umgewandelt werden.

Sofern nicht speziell genannt, liegt bei der Nennung einer Verbindung der Formel I stets ein Gemisch beider enantiomeren Formen vor. Beide Antipoden zeigen unterschiedliche mikrobizide Aktivität.

Es wurde überraschend festgestellt, dass Verbindungen der Formel I ein für praktische Bedürfnisse sehr günstiges Mikrobizid-Spektrum gegen phytopathogene Pilze und Bakterien aufweisen. Sie besitzen sehr vorteilhafte kurative, präventive und systemische Eigenschaften und lassen sich zum Schutz von Kulturpflanzen einsetzen. Mit den Wirkstoffen der Formel I können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben.

Die Wirkstoffe sind gegen die den folgenden Klassen angehörenden phytopathogenen Pilze wirksam : Ascomyceten (z. B. Venturia, Podosphaera, Erysiphe, Monilinia, Uncinula) ; Basidiomyceten (z. B. die Gattungen Hemiöeia, Rhizoctonia, Pellicularia, Puccinia) ; Fungi imperfecti (z. B. Botrytis, Helminthosporium, Fusarium, Septoria, Cercospora, Piricularia und Alternaria) und gegen Phytomyceten wie Pythium. Verbindungen der Formel I wirken auch gegen phytopathogene Bakterien, wie insbesondere gegen die zur Familie der Pseudomonadaceae gehörenden Xanthomonas Species. Ueberdies wirken die Verbindungen der Formel I systemisch. Sie können ferner als Beizmittel zur Behandlung von Saatgut (Früchte, Knollen, Körner) und Pflanzenstecklingen zum Schutz vor Pilzinfektionen sowie gegen im Erdboden auftretende phytopathogene Pilze eingesetzt werden. Die erfindungsgemässen Wirkstoffe zeichnen sich durch besonders gute Pflanzenverträglichkeit aus.

Die Erfindung betrifft somit auch mikrobizide Mittel sowie die Verwendung der Verbindungen der Formel I zur Bekämpfung phytopathogener Mikroorganismen, insbesondere pflanzenschädigender Pilze bzw. die präventive Verhütung eines Befalls an Pflanzen.

Darüberhinaus schliesst die vorliegende Erfindung auch die Herstellung agrochemischer Mittel ein, die gekennzeichnet ist durch das innige Vermischen der Aktivsubstanz mit einem oder mehreren hierin beschriebenen Substanzen bzw. Substanzgruppen. Eingeschlossen ist auch ein Verfahren zur Behandlung von Pflanzen, das sich durch Applikation der Verbindungen der Formel I bzw. der neuen Mittel auszeichnet.

Als Zielkulturen für die hierin offenbarten Indikationsgebiete gelten im Rahmen dieser Erfindung beispielsweise folgende Pflanzenarten : Getreide (Weizen, Gerste, Roggen, Hafer, Reis, Sorghum und Verwandte) ; Rüben (Zucker- und Futterrüben) ; Kern-, Stein- und Beerenobst ; (Aepfel, Birnen, Pflaumen, Pfirsiche, Mandeln, Kirschen, Erd-, Him- und Brombeeren) ; Hülsenfrüchte (Bohnen, Linsen, Erbsen, Soja) ; Oelkulturen (Raps, Senf, Mohn, Oliven, Sonnenblumen, Kokos, Rizinus, Kakao, Erdnüsse) ; Gurkengewächse (Kürbis, Gurken, Melonen) ; Fasergewächse (Baumwolle, Flachs, Hanf, Jute) ; Citrusfrüchte : (Orangen, Zitronen, Pampelmusen, Mandarinen) ; Gemüsesorten (Spinat, Salat, Spargel, Kohlartern, Möhren, Zwiebeln, Tomaten, Kartoffeln, Paprika) ; Lorbeergewächse (Avocado, Cinnamonum, Kampfer) oder Pflanzen wie Mais, Tabak, Nüsse, Kaffee, Zuckerrohr, Tee, Weinreben, Hopfen, Bananen- und Naturkautschukgewächse sowie Zierpflanzen.

Wirkstoffe der Formel I werden üblicherweise in Form von Zusammensetzungen verwendet und können gleichzeitig oder nacheinander mit weiteren Wirkstoffen auf die zu behandelnde Fläche oder Pflanze gegeben werden. Diese weiteren Wirkstoffe können sowohl Düngemittel, Spurenelement-Vermittler oder andere das Pflanzenwachstum beeinflussende Präparate sein. Es können aber auch selektive Herbizide, Insektizide, Fungizide, Bakterizide, Nematizide, Molluskizide oder Gemische mehrerer dieser Präparate sein, zusammen mit gegebenenfalls weiteren in der Formulierungstechnik üblichen Trägerstoffen, Tensiden oder anderen applikationsfördernden Zusätzen. Besonders vorteilhafte Zuschlagstoffe sind ferner Phospholipide pflanzlichen oder tierischen Ursprungs.

Geeignete Träger und Zusätze können fest oder flüssig sein und entsprechen den in der Formulierungstechnik zweckdienlichen Stoffen, wie z. B. natürlichen oder regenerierten mineralischen Stoffen, Lösungs-, Dispergier-, Netz-, Haft-, Verdickungs-, Binde- oder Düngemitteln.

Die Verbindungen der Formel I werden dabei in unveränderter Form oder vorzugsweise zusammen mit den in der Formulierungstechnik üblichen Hilfsmitteln eingesetzt und werden daher z. B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, durch Verkapselungen in z. B. polymeren Stoffen in bekannter Weise verarbeitet. Die Anwedungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen liegen im allgemeinen bei 50 g bis 5 kg Aktivsubstanz (AS) je ha ; bevorzugt 100 g bis 2 kg AS/ha, insbesondere bei 200 g bis 600 g AS/ha.

Die Applikation solcher Mittel kann direkt auf die Pflanze oder Pflanzenteile erfolgen (Blattapplikation) oder auf den Standort der Pflanze (Bodenapplikation) oder auf die Vermehrungsstelle, z. B. durch Saatgut-Applikation.

Die Formulierungen, d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden). Solche Mittel sind gleichfalls Gegenstand vorliegender Erfindung.

Als Lösungsmittel können in Frage kommen : Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethylenglykolmonomethyl-ether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle oder Sojaöl ; oder Wasser.

Als feste Trägerstoffe, z. B. für Stäubemittel und dispergierbare Pulver, lassen sich Calcit, Talkum, Kaolin, Montmorillonit oder Attapulgit, hochdisperse Kieselsäure oder saugfähige Polymerisate verwenden. Als gekörnte, adsorptive Granulatträger kommen Bimsstein, Ziegelbruch, Sepiolit oder Bentonit, als nicht sorptive Träger z. B. Calcit oder Dolomit in Frage. Es können auch zerkleinerte Pflanzenrückstände verwendet werden.

Als oberflächenaktive Verbindungen kommen je nach Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u. a. in folgenden Publikationen beschrieben : « Mc Cutcheon's Detergents and Emulsifiers Annual » MC Publishing Corp., Ridgwood New Jersey, 1980 Sisely and Wood, « Encyclopedia of Surface Active Agents », Chemical Publishing Co, Inc. New York, 1980.

Die agrochemischen Zubereitungen enthalten in der Regel 0,1 bis 99 %, insbesondere 0,1 bis 95 % Wirkstoff der Formel I, 99,9 bis 1 %, insbesondere 99,8 bis 5 % fester oder flüssiger Zusatzstoffe, darunter 0 bis 25 %, insbesondere 0,1 bis 25 % eines oder mehrerer Tenside.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittelm Haftmittel sowie Dünger oder andere Wirkstoffe zur Erzielung spezieller Effekte enthalten.

Die nachfolgenden Beispiele dienen zur näheren Erläuterung der Erfindung, ohne dieselbe einzuschränken. Temperaturen sind in Celsiusgraden angegeben. Prozente und teile beziehen sich auf das Gewicht. Darüberhinaus werden folgende Symbole verwendet : h = Stunde ; d = Tag ; min = Minute ; RT = Raumtemperatur ; N = Normalität ; abs. = absolut wasserfrei ; DMSO = Dimethylsulfoxid ; DMF = Dimethylformamid.

## Herstellungsbeispiele

Beispiel 1 : Herstellung von

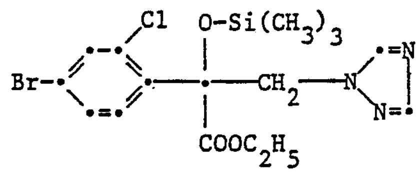

2-(1H-1,2,4-Triazolylmethyl-1'-yl)-2-trimethylsilyloxy-2-chlor-4-bromphenylessigsäureethylester

Zu 11,2 g (0,03 Mol) 2-(1H-1,2,4-Triazolylmethyl-1'-yl)-2-hydroxy-2-chlor-4-bromphenylessigsäurediethylester und 3,6 g (0,036 Mol) Triethylamin in 50 ml Dichlormethan werden 3,6 g (0,033 Mol) Trimethylchlorsilan, gelöst in 20 ml Dichlormethan, bei RT zugetropft und das Reaktionsgemisch 16 h bei RT gerührt. Anschliessend wird das Reaktionsgemisch nacheinander mit Sidalösung und Wasser gewaschen, die Dichlormethanphase mit Natriumsulfat getrocknet und filtriert. Nach Entfernen des Lösungsmittels im Vakuum bleiben 12 g des 2-(1H-1,2,4-Triazolylmethyl-1'-yl)-2-trimethylsilyloxy-2-chlor-4-bromphenylessigsäureethylesters als braunes Harz zurück.

Nach Art des vorstehenden Beispiels und der einleitend angegebenen Herstellungsvarianten lassen sich folgende Verbindungen gemäss vorliegender Erfindung herstellen :

Tabelle 1 : Verbindungen der Formel

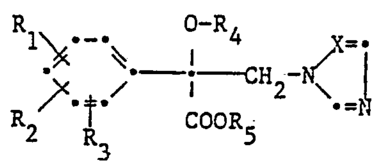

| Verb.Nr. | $R_1$ | $R_2$ | $R_3$ | $R_4$ | $R_5$ | X | Physik. Konst. |
|---|---|---|---|---|---|---|---|
| 1.1 | 2-Cl | 4-Br | H | $-Si(CH_3)_3$ | $CH_3$ | N | $n_D^{42}$ 1.5240 |
| 1.2 | 2-Cl | 4-Br | H | $-Si(CH_3)_3$ | $CH_3$ | CH | |
| 1.3 | 2-Cl | 4-Br | H | $-SI(CH_3)_3$ | $C_2H_5$ | N | $n_D^{36}$ 1.5390 |
| 1.4 | 2-Cl | 4-Br | H | $-Si(CH_3)_3$ | $C_3H_7$-n | N | |
| 1.5 | 2-Cl | 4-Br | H | $-Si(CH_3)_3$ | $C_3H_7$-i | N | |
| 1.6 | 2-Cl | 4-Br | H | $-Si(CH_3)_3$ | $C_4H_9$-n | N | |
| 1.7 | 2-Cl | 4-Br | H | $-Si(CH_3)_3$ | Cyclopentyl | N | |
| 1.8 | 2-Cl | 4-Br | H | $-Si(CH_3)_3$ | $CH_2-C_6H_5$ | N | $n_D^{37}$ 1.5330 |
| 1.9 | 2-Cl | 4-Br | H | $-Si(CH_3)_3$ | $CH_2CH_2Cl$ | N | |
| 1.10 | 2-Cl | 4-Br | H | $-Si(CH_3)_3$ | $CH_2CH_2OCH_3$ | N | |
| 1.11 | 2-Cl | 4-Br | H | $-Si(CH_3)_3$ | $CH_2CH=CH_2$ | N | |
| 1.12 | 2-Cl | 4-Br | H | $-Si(CH_3)_3$ | $CH_2OCH_3$ | N | |

Tabelle 1 (Fortsetzung)

| Verb.Nr. | $R_1$ | $R_2$ | $R_3$ | $R_4$ | $R_5$ | X | Physik. Konst. |
|---|---|---|---|---|---|---|---|
| 1.13 | 2-Cl | 4-Br | H | $-Si(CH_3)_3$ | $CH_2SCH_3$ | N | - |
| 1.14 | 2-Cl | 4-Br | H | $-Si(CH_3)_3$ | $CH_2COOC_2H_5$ | N | |
| 1.15 | 2-Cl | 4-Br | H | $-Si(CH_3)_3$ | $CH(CH_3)COOCH_3$ | N | |
| 1.16 | 2-Cl | 4-Br | H | $-Si(CH_3)_3$ | $CH_2C(O)C_4H_9$-t | N | |
| 1.17 | 2-Cl | 4-Br | H | $-Si(C_2H_5)_3$ | $CH_3$ | N | Smp.87-94° |
| 1.18 | 2-Cl | 4-Br | H | $-Si(C_2H_5)_3$ | $CH_2CH_2Cl$ | N | |
| 1.19 | 2-Cl | 4-Br | H | $-Si(CH_3)_2CH_2Cl$ | $CH_3$ | N | Smp.100-2° |
| 1.20 | 2-Cl | 4-Br | H | $-Si(CH_3)_2CH_2Cl$ | $C_2H_5$ | N | $n_D^{42}$ 1.5315 |
| 1.21 | 2-Cl | 4-Br | H | $-Si(CH_3)_2C_4H_9$-t | $C_2H_5$ | N | $n_D^{40}$ 1.5201 |
| 1.22 | 2-Cl | 4-Br | H | $-Si(CH_3)_2CH_2CH{=}CH_2$ | $C_2H_5$ | N | $n_D^{43}$ 1.5373 |
| 1.23 | 2-Cl | 4-Br | H | $-Si(C_6H_5)_2C_4H_9$-t | $C_2H_5$ | N | Smp.131-9° |
| 1.24 | 2-Cl | 4-Br | H | $-Si(C_6F_5)(CH_3)_2$ | $C_2H_5$ | N | $n_D^{42}$ 1.5161 |
| 1.25 | 2-Br | 4-Br | H | $-Si(CH_3)_3$ | $C_2H_5$ | N | $n_D^{36}$ 1.5420 |
| 1.26 | 2-Br | 4-Br | H | $-Si(C_2H_5)_3$ | $C_2H_5$ | N | |
| 1.27 | H | 4-Br | H | $-Si(CH_3)_3$ | $C_2H_5$ | N | |
| 1.28 | 2-Cl | 4-F | H | $-Si(CH_3)_3$ | $CH_3$ | N | |
| 1.29 | 2-Cl | 4-F | H | $-Si(CH_3)_3$ | $CH_3$ | CH | |
| 1.30 | 2-Cl | 4-F | H | $-Si(CH_3)_3$ | $C_2H_5$ | N | |
| 1.31 | 2-Cl | 4-F | H | $-Si(C_2H_5)_3$ | $CH_3$ | N | |
| 1.32 | 2-Cl | 4-Cl | H | $-Si(CH_3)_3$ | $CH_3$ | N | Smp.86-87° |
| 1.33 | 2-Cl | 4-Cl | H | $-Si(CH_3)_3$ | $CH_3$ | CH | |
| 1.34 | 2-Cl | 4-Cl | H | $-Si(CH_3)_3$ | $C_2H_5$ | N | Smp.104-5° |
| 1.35 | 2-Cl | 4-Cl | H | $-Si(CH_3)_3$ | $C_3H_7$-n | N | Smp.60-61° |
| 1.36 | 2-Cl | 4-Cl | H | $-Si(CH_3)_3$ | $C_3H_7$-i | N | Smp.107-8° |
| 1.37 | 2-Cl | 4-Cl | H | $-Si(CH_3)_3$ | $C_4H_9$-n | N | $n_D^{54}$ 1.5040 |
| 1.38 | 2-Cl | 4-Cl | H | $-Si(CH_3)_3$ | $C_4H_9$-t | N | |
| 1.39 | 2-Cl | 4-Cl | H | $-Si(CH_3)_3$ | Cyclohexyl | N | $n_D^{54}$ 1.5161 |
| 1.40 | 2-Cl | 4-Cl | H | $-Si(CH_3)_3$ | Cyclophentyl | N | |
| 1.41 | 2-Cl | 4-Cl | H | $-Si(CH_3)_3$ | $C_6H_5$ | N | |
| 1.42 | 2-Cl | 4-Cl | H | $-Si(CH_3)_3$ | $CH_2C_6H_5$ | N | |
| 1.43 | 2-Cl | 4-Cl | H | $-Si(CH_3)_3$ | $CH_2CH_2Cl$ | N | |
| 1.44 | 2-Cl | 4-Cl | H | $-Si(CH_3)_3$ | $CH_2CH_2OCH_3$ | N | |
| 1.45 | 2-Cl | 4-Cl | H | $-Si(CH_3)_3$ | $CH_2CH{=}CH_2$ | N | Smp.58-59° |
| 1.46 | 2-Cl | 4-Cl | H | $-Si(CH_3)_3$ | $CH_2OCH_3$ | N | |
| 1.47 | 2-Cl | 4-Cl | H | $-Si(CH_3)_3$ | $CH_2SCH_3$ | N | |
| 1.48 | 2-Cl | 4-Cl | H | $-Si(CH_3)_3$ | $CH_2COOC_2H_5$ | N | $n_D^{54}$ 1.511 |

Tabelle 1 (Fortsetzung)

| Verb.Nr. | $R_1$ | $R_2$ | $R_3$ | $R_4$ | $R_5$ | X | Physik. Konst. |
|---|---|---|---|---|---|---|---|
| 1.49 | 2-Cl | 4-Cl | H | $-Si(CH_3)_3$ | $CH(CH_3)COOCH_3$ | N | |
| 1.50 | 2-Cl | 4-Cl | H | $-Si(CH_3)_3$ | $CH_2C(O)C_4H_9$-t | N | |
| 1.51 | 2-Cl | 4-Cl | H | $-Si(C_2H_5)_3$ | $CH_3$ | N | Smp.107-8° |
| 1.52 | 2-Cl | 4-Cl | H | $-Si(C_2H_5)_3$ | $C_2H_5$ | N | |
| 1.53 | 2-Cl | 4-Cl | H | $-Si(C_2H_5)_3$ | $C_3H_7$-i | N | $n_D^{54}$ 1.4910 |
| 1.54 | 2-Cl | 4-Cl | H | $-Si(C_2H_5)_3$ | $C_4H_9$-n | N | |
| 1.55 | 2-Cl | 4-Cl | H | $-Si(C_2H_5)_3$ | $CH_2CH=CH_2$ | N | |
| 1.56 | 2-Cl | 4-Cl | H | $-Si(CH_3)_2CH_2Cl$ | $CH_3$ | N | |
| 1.57 | 2-Cl | 4-Cl | H | $-Si(CH_3)_2C_4H_9$-t | $CH_3$ | N | |
| 1.58 | 2-Cl | 4-Cl | H | $-Si(CH_3)_2CH_2CH=CH_2$ | $CH_3$ | N | |
| 1.59 | 2-Cl | 4-Cl | H | $-Si(C_6H_5)_2C_4H_9$-t | $CH_3$ | N | |
| 1.60 | 2-Cl | 4-Cl | H | $-Si(CH_3)_2C_6F_5$ | $CH_3$ | N | |
| 1.61 | 2-Cl | 4-Cl | 6-Cl | $-Si(CH_3)_3$ | $C_2H_5$ | N | |
| 1.62 | 2-Cl | 4-Cl | H | $-Si(CH_3)_2C_6H_5$ | $CH_3$ | N | |
| 1.63 | 2-Cl | 4-Cl | H | $-Si(C_6H_5)_2CH_3$ | $CH_3$ | N | |
| 1.64 | 2-Cl | 4-Br | H | $-Si(CH_3)_2C_6H_5$ | $C_2H_5$ | N | $n_D^{40}$ 1.5460 |
| 1.65 | 2-Cl | 4-Br | H | $-Si(C_6H_5)_2CH_3$ | $C_2H_5$ | N | |
| 1.66 | 2-Cl | 4-Br | H | $-Si(C_2H_5)_3$ | $C_2H_5$ | N | $n_D^{43}$ 1.5222 |
| 1.67 | 2-Br | 4-Br | H | $-Si(CH_3)_3$ | $C_3H_7$-i | N | Smp.92-96° |

Tabelle 2 : Verbindungen der Formel

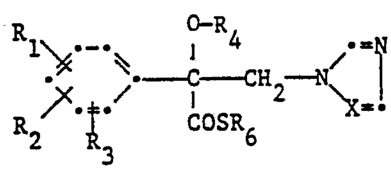

| Verb.Nr. | $R_1$ | $R_2$ | $R_3$ | $R_4$ | $R_6$ | X | Physik. Konst. |
|---|---|---|---|---|---|---|---|
| 2.1 | 2-Cl | 4-Cl | H | $-Si(CH_3)_3$ | $CH_3$ | N | |
| 2.2 | 2-Cl | 4-Cl | H | $-Si(CH_3)_3$ | $C_2H_5$ | N | Smp.88-90° |
| 2.3 | 2-Cl | 4-Cl | H | $-Si(CH_3)_3$ | $C_2H_5$ | CH | |
| 2.4 | 2-Cl | 4-Cl | H | $-Si(CH_3)_3$ | $CH_2C_6H_5$ | N | |
| 2.5 | 2-Cl | 4-Cl | H | $-Si(CH_3)_3$ | $C_6H_5$ | N | |
| 2.6 | 2-Cl | 4-Cl | H | $-Si(C_2H_5)_3$ | $CH_3$ | N | |
| 2.7 | 2-Cl | 4-Cl | H | $-Si(C_2H_5)_3$ | $C_2H_5$ | N | |
| 2.8 | 2-Cl | 4-Cl | H | $-Si(CH_3)_2CH_2Cl$ | $C_2H_5$ | N | |
| 2.9 | 2-Cl | 4-Br | H | $-Si(CH_3)_3$ | $C_2H_5$ | N | |

(Fortsetzung)

| Verb.Nr. | $R_1$ | $R_2$ | $R_3$ | $R_4$ | $R_6$ | X | Physik. Konst. |
|---|---|---|---|---|---|---|---|
| 2.10 | 2-Cl | 4-Br | H | $-Si(C_2H_5)_3$ | $C_2H_5$ | N | |
| 2.11 | 2-Cl | 4-F | H | $-Si(CH_3)_3$ | $C_2H_5$ | N | |
| 2.12 | 2-Cl | 4-F | H | $-Si(C_2H_5)_3$ | $C_2H_5$ | N | |
| 2.13 | 2-Cl | 4-Cl | 6-Cl | $-Si(CH_3)_3$ | $C_2H_5$ | N | |

Tabelle 3 : Verbindungen der Formel

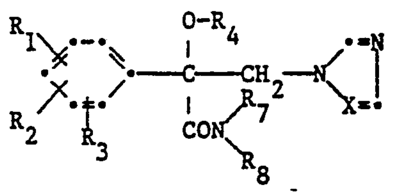

| Verb.Nr. | $R_1$ | $R_2$ | $R_3$ | R | 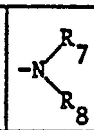 | X | Physik. Konst. |
|---|---|---|---|---|---|---|---|
| 3.1 | 2-Cl | 4-Cl | H | $-Si(CH_3)_3$ | $-N(CH_3)_2$ | N | |
| 3.2 | 2-Cl | 4-Cl | H | $-Si(CH_3)_3$ | $-NHCH_3$ | N | |
| 3.3 | 2-Cl | 4-Cl | H | $-Si(CH_3)_3$ | $-NHCH_3$ | CH | |
| 3.4 | 2-Cl | 4-Cl | H | $-Si(CH_3)_3$ | 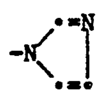 | N | |
| 3.5 | 2-Cl | 4-Cl | H | $-Si(CH_3)_3$ | 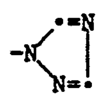 | N | |
| 3.6 | 2-Cl | 4-Cl | H | $-Si(C_2H_5)_3$ | $-NHCH_3$ | N | |
| 3.7 | 2-Cl | 4-F | H | $-Si(CH_3)_3$ | $-N(CH_3)_2$ | CH | |
| 3.8 | 2-Cl | 4-F | H | $-Si(CH_3)_3$ | $-NHCH_3$ | N | |
| 3.9 | 2-Cl | 4-F | H | $-Si(CH_3)_3$ | $NHCH_2C_6H_5$ | N | |
| 3.10 | 2-Cl | 4-Cl | 6-Cl | $-Si(C_2H_5)_3$ | $-N(CH_3)_2$ | N | |
| 3.11 | 2-Cl | 4-Br | H | $-Si(CH_3)_3$ | $-N(CH_3)_2$ | N | |
| 3.12 | 2-Cl | 4-Br | H | $-Si(CH_3)_3$ | $-NHCH_3$ | N | |
| 3.13 | 2-Cl | 4-Br | H | $-Si(CH_3)_3$ | $-NHC_2H_5$ | N | |
| 3.14 | 2-Cl | 4-Br | H | $-Si(CH_3)_3$ | $-NHN(CH_3)_2$ | N | |

(Siehe Tabelle 4 Seite 15 f.)

Tabelle 4 : Verbindungen der Formel

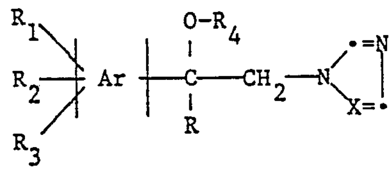

| Verb.Nr. | 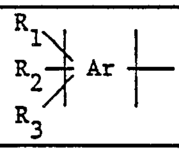 | $R_4$ | R | X | Physik. Konst. |
|---|---|---|---|---|---|
| 4.1 | 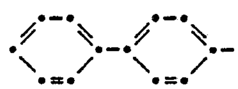 | $-Si(CH_3)_3$ | $-COOCH_3$ | N | |
| 4.2 | 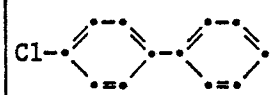 | $-Si(CH_3)_3$ | $-COOCH_3$ | N | |
| 4.3 | 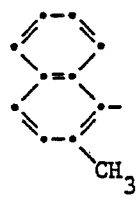 | $-Si(CH_3)_3$ | $-COOCH_3$ | N | |
| 4.4 | 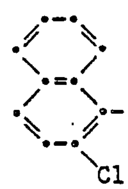 | $-Si(CH_3)_3$ | $-COOCH_3$ | CH | |
| 4.5 | 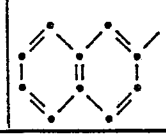 | $-Si(CH_3)_3$ | $-COOCH_3$ | N | |

Formulierungsbeispiele für Wirkstoffe der Formel I (% = Gewichtsprozent)

| A. Emulsions-Konzentrate | a) | b) | c) |
|---|---|---|---|
| Wirkstoff aus den Tabellen 1 bis 4 | 25 % | 40 % | 50 % |
| Ca-Dodecylbenzolsulfonat | 5 % | 8 % | 6 % |
| Ricinusöl-polyethylenglykolether (36 Mol Ethylenoxid) | 5 % | — | — |
| Tributylphenoyl-polyethylenglykolehter (30 Mol Ethylenoxid) | — | 12 % | 4 % |
| Cyclohexanon | — | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| B. Lösungen | a) | b) | c) | d) |
|---|---|---|---|---|
| Wirkstoff aus den Tabellen 1 bis 4 | 80 % | 10 % | 5 % | 95 % |
| Ethylenglykol-monomethyl-ether | 20 % | — | — | — |
| Polyethylenglykol MG 400 | — | 70 % | — | — |
| N-Methyl-2-pyrrolidon | — | 20 % | — | — |
| Epoxydiertes Kokosnussöl | — | — | 1 % | 5 % |
| Benzin (Siedegrenzen 160-190 °C) | — | — | 94 % | — |

(MG = Molekulargewicht)

Die Lösungen sind zur Anwendung in Form kleinster Tropfen geeignet.

| C. Granulate | a) | b) |
|---|---|---|
| Wirkstoff aus den Tabellen 1 bis 4 | 5 % | 10 % |
| Kaolin | 94 % | — |
| Hochdisperse Kieselsäure | 1 % | — |
| Attapulgit | — | 90 % |

Der Wirkstoff wird in Methylenchlorid gelöst, auf den Träger aufgesprüht und das Lösungsmittel anschliessend im Vakuum abgedampft.

| D. Stäubemittel | a) | b) |
|---|---|---|
| Wirkstoff aus den Tabellen 1 bis 4 | 2 % | 5 % |
| Hochdisperse Kieselsäure | 1 % | 5 % |
| Talkum | 97 % | — |
| Kaolin | — | 90 % |

Durch inniges Vermischen der Trägerstoffe mit dem Wirkstoff erhält man gebrauchsfertige Stäubemittel.

| E. Spritzpulver | a) | b) | c) |
|---|---|---|---|
| Wirkstoff aus den Tabellen 1 bis 4 | 25 % | 50 % | 75 % |
| Na-Ligninsulfonat | 5 % | 5 % | — |
| Na-Laurylsulfat | 3 % | — | 5 % |
| Na-Diisobutylnaphthalinsulfonat | — | 6 % | 10 % |
| Octylphenolpolyethylenglykolether (7-8 Mol Ethylenoxid) | — | 2 % | — |
| Hochdisperse Kieselsäure | 5 % | 10 % | 10 % |
| Kaolin | 62 % | 27 % | — |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

## Biologische Beispiele :

### Beispiel B1 : Wirkung gegen Puccinia graminis auf Weizen

a) Residual-protektive Wirkung

Weizenpflanzen wurden 6 Tage nach der Aussaat mit einer aus Spritzpulver des Wirkstoffes hergestellten Spritzbrühe (0,06 % Aktivsubstanz) besprüht. Nach 24 Stunden wurden die behandelten Pflanzen mit einer Uredosporensuspension des Pilzes infiziert. Nach einer Inkubation während 48 Stunden bei 95-100 % relativer Luftfeuchtigkeit und ca. 20 °C wurden die infizierten Pflanzen in einem Gewächshaus bei ca. 22 °C aufgestellt. Die Beurteilung der Rostpustelnentwicklung erfolgte 12 Tage nach der Infektion.

b) Systemische Wirkung

Zu Weizenpflanzen wurde 5 Tage nach der Aussaat eine aus Spritzpulver des Wirkstoffes hergestellte Spritzbrühe gegossen (0,006 % Aktivsubstanz bezogen auf das Bodenvolumen). Nach 48 Stunden wurden die behandelten Pflanzen mit einer Uredosporensuspension des Pilzes infiziert. Nach einer Inkubation während 48 Stunden bei 95-100 % relativer Luftfeuchtigkeit und ca. 20 °C wurden die infizierten Pflanzen in einem Gewächshaus bei ca. 22 °C aufgestellt. Die Beurteilung der Rostpustelnentwicklung erfolgte 12 Tage nach der Infektion.

Unbehandelte, aber infizierte Kontrollpflanzen zeigten einen Befall von 100 %, Pflanzen, die mit Mitteln enthaltend Verbindungen der Formel I behandelt waren, zeigten nur geringen (< 20 %) oder keinen Befall. Die Verbindungen Nr. 1.1, 1.3, 1.8, 1.17, 1.19 bis 1.25, 1.32, 1.34 bis 1.37, 1.39, 1.45, 1.48, 1.51, 1.53, 1.64, 1.66 und 1.67 unterdrückten den Pilzbefall vollständig (0-5 %). Verbindung Nr. 1.1 verhinderte den Pilzbefall auch noch bei einer Konzentration von 0,002 % vollständig.

### Beispiel B2 : Wirkung gegen Cercospora arachidicola auf Erdnusspflanzen

a) Residual-protektive Wirkung

10-15 cm hohe Erdnusspflanzen wurden mit einer aus Spritzpulver der Wirksubstanz hergestellten Spritzbrühe (0,006 Aktivsubstanz besprüht und 48 Stunden später mit einer Konidiensuspension des Pilzes infiziert. Die infizierten Pflanzen wurden während 72 Stunden bei ca. 21 °C und hoher Luftfeuchtigkeit inkubiert und anschliessend bis zum Auftreten der typischen Blattflecken in einem Gewächshaus aufgestellt. Die Beurteilung der fungiziden Wirkung erfolgte 12 Tage nach der Infektion basierend auf Anzahl und Grösse der auftretenden Flecken.

Im Vergleich zu unbehandelten, aber infizierten Kontrollpflanzen (Anzahl und Grösse der Flecken = 100 %), zeigten Erdnusspflanzen, die mit Wirkstoffen aus den Tabellen 1 bis 4 behandelt wurden, einen stark reduzierten Cercospora-Befall. So verhinderten Verbindungen Nr. 1.1, 1.3, 1.8, 1.19, 1.20, 1.22, 1.24, 1.25, 1.32, 1.34 bis 1.37, 1.39, 1.45, 1.53, 1.64, 1.66 und 1.67 in obigen Versuchen das Auftreten von Flecken fast vollständig (0-10 %).

Beispiel B3 : Wirkung gegen Erysiphe graminis auf Gerste

a) Residual-protektive Wirkung

Ca. 8 cm hohe Gerstenpflanzen wurden mit einer aus Spritzpulver des Wirkstoffes hergestellten Spritzbrühe (0,02 % Aktivsubstanz) besprüht. Nach 3-4 Stunden wurden die behandelten Pflanzen mit Konidien des Pilzes bestäubt. Die infizierten Gerstenpflanzen wurden in einem Gewächshaus bei ca.; 22 °C aufgestellt und der Pilzbefall nach 10 Tagen beurteilt.

b) Systemische Wirkung

Zu ca. 8 cm hohen Gerstenpflanzen wurde eine aus Spritzpulver des Wirkstoffes hergestelte Spritzbrühe gegossen (0,006 % Aktivsubstanz bezogen auf das Erdvolumen). Es wurde dabei darauf geachtet, dass die Spritzbrühe nicht mit den oberirdischen Pflanzenteilen in Berührung kam. Nach 48 Stunden wurden die behandelten Pflanzen mit Konidien des Pilzes bestäubt. Die infizierten Gerstenpflanzen wurden in einem Gewächshaus bei ca. 22 °C aufgestellt und der Pilzbefall nach 10 Tagen beurteilt.

Verbindungen der Formel I bzw. Verbindungen aus den Tabellen 1 bis 4 reduzierten den Pilzbefall unter 20 %, während unbehandelte aber infizierte Kontrollpflanzen zu 100 % befallen waren. Eine vollständige Hemmung des Pilzbefalls (0-5 %) wurde mit den Verbindungen Nr. 1.1, 1.3, 1.8, 1.17, 1.19, 1.20, 1.21, 1.22, 1.24, 1.25, 1.32, 1.34 bis 1.37, 1.45, 1.48, 1.51, 1.53, 1.64, 1.66 und 1.67 erzielt.

Beispiel B4 : Residual-protektive Wirkung gegen Venturia inaequalis auf Apfeltrieben

Apfelstecklinge mit 10-20 cm langen Frischtrieben wurden mit einer aus Spritzpulver des Wirkstoffes hergestellten Spritzbrühe (0,06 % Aktivsubstanz) besprüht. Nach 24 Stunden wurden die behandelten Pflanzen mit einer Konidiensuspension des Pilzes infiziert. Die Pflanzen wurden dann während 5 Tagen bei 90-100 % relativer Luftfeuchtigkeit inkubiert und während 10 weiteren Tagen in einem Gewächshaus bei 20-24 °C aufgestellt. Der Schorfbefall wurde 15 Tage nach der Infektion beurteilt. Verbindungen 1.3, 1.8 und 1.25 hemmten den Krankheitsbefall auf weniger als 10 % und zeigten keinen Krankheitsbefall (z. B. Verb. 1.3).

Triebe an Apfelbäumen werden im Freiland in gleichem Masse geschützt, ohne in ihrer Weiterentwicklung gehemmt zu werden.

Beispiel B5 : Wirkung gegen Botrytis cinerae auf Bohnen Residual protektive Wirkung

Ca. 10 cm hohe Bohnen-Pflanzen wurden mit einer aus Spritzpulver des Wirkstoffes hergestellten Spritzbrühe (0,02 % Aktivsubstanz) besprüht. Nach 48 Stunden wurden die behandelten Pflanzen mit einer Konidiensuspension des Pilzes infiziert. Nach einer Inkubation der infizierten Pflanzen während 3 Tagen bei 95-100 % relativer Luftfeuchtigkeit und 21 °C erfolgte die Beurteilung des Pilzbefalls. Die Verbindungen aus den Tabellen 1 bis 4 hemmten in vielen Fällen die Pilzinfektion sehr stark.

Bei einer Konzentration von 0,02 % erwiesen sich z. B. die Verbindungen Nr. 1.1, 1.3, 1.8, 1.19, 1.20, 1.21, 1.22, 1.24, 1.25, 1.32, 1.34, 1.35, 1.36, 1.37, 1.39, 1.45, 1.66 und 1.67 als voll wirksam (Krankheitsbefall 0 bis 5 %).

Beispiel B6 : Wirkung gegen Piricularia oryzae auf Reis Residual-protektive Wirkung

Reispflanzen wurden nach zweiwöchiger Anzucht mit einer aus Spritzpulver des Wirkstoffs hergestellten Spritzbrühe (0,02 % Aktivsubstanz) besprüht. Nach 48 Stunden wurden die behandelten Pflanzen mit einer Konidiensuspension des Pilzes infiziert. Nach 5 Tagen Inkubation bei 95-100 % relativer Luftfeuchtigkeit und 24 °C wurde der Pilzbefall beurteilt.

Gegenüber 100 % Befall bei ungeschützten Pflanzen hemmten Verbindungen aus den Tabellen 1 bis 4 den Pilzbefall deutlich, so z. B. die Verbindungen Nr. 1.1, 1.8, 1.19, 1.20, 1.22, 1.24, 1.25, 1.35 und 1.66.

**Patentansprüche** (für die Vertragsstaaten : BE, CH, DE, FR, GB, IT, LI, NL, SE)

1. Silyloxyalkan-azole der Formel I

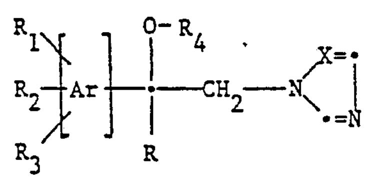

(I)

worin

X für das Brückenglied —CH= oder —N= steht;

Ar eine Phenyl-, Diphenyl- oder Naphthylgruppe bedeutet;

$R_1$, $R_2$, $R_3$ unabhängig voneinander für Wasserstoff, Nitro, Halogen, $C_1$-$C_3$-Alkyl, $C_1$-$C_3$-Alkoxy oder $C_1$-$C_3$-Haloalkyl stehen;

R eine der Gruppen

$—COOR_5$, $—COSR_6$, 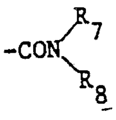

oder —CN darstellt;

$R_5$ unsubstituiertes oder durh Halogen substituiertes $C_2$-$C_{10}$ Alkenyl; ein unsubstituiertes oder durch Halogen substituiertes $C_2$-$C_{10}$-Alkinyl; oder eine $C_3$-$C_8$-Cycloalkylgruppe oder eine unsubstituierte oder durch Halogen, $C_1$-$C_4$-Alkyl, $C_1$-$C_4$-Alkoxy, —CN oder $—CF_3$ substituierte Phenylgruppe bedeutet; oder aber eine $C_1$-$C_{12}$-Alkylkette darstellt, die ab $C_2$-Alkyl durch Sauerstoff oder Schwefel unterbrochen und die unsubstituiert oder durch eine der folgenden Atome oder Gruppen substituiert sein kann: Halogen, Phenyl, —COOAlkyl($C_1$-$C_4$), —COAlkyl($C_1$-$C_4$), —COPhenyl, einen ungesättigten oder gesättigten 5- oder 6-gliedrigen Ring mit Sauerstoff oder Schwefel als Heteroatom, wobei jeder Phenylrest unsubstituiert oder ein- oder mehrfach durch gleiche oder verschiedene Halogenatome substituiert ist;

$R_6$ $C_1$-$C_{10}$-Alkyl oder eine unsubstituierte oder durch Halogen, $C_1$-$C_4$-Alkyl, $C_1$-$C_4$-Alkoxy, —CN oder $—CF_3$ substituierte Phenyl- oder Benzylgruppe bedeutet;

$R_7$ und $R_8$ unabhängig voneinander Wasserstoff, $C_1$-$C_6$-Alkyl, $C_3$-$C_7$-Cycloalkyl oder eine Phenyl- oder Benzylgruppe darstellen, bei denen jeweils der aromatische Ring unsubstituiert oder durch Halogen, $C_1$-$C_4$-Alkyl, $C_1$-$C_4$-Alkoxy, —CN oder $—CF_3$ substituiert ist, oder wobei einer der Substituenten $R_7$ oder $R_8$ auch die Gruppe $—N(R_9)(R_{10})$ bedeutet oder wobei die Substituenten $R_7$ und $R_8$ zusammen einen 5- oder 6-gliedrigen gesättigten oder ungesättigten heterocyclischen Ring bilden, der noch 1 oder 2 weitere N-Atome enthalten kann;

$R_9$ und $R_{10}$ unabhängig voneinander Wasserstoff, $C_1$-$C_4$-Alkyl oder einen Phenylrest bedeuten, der unsubstituiert oder durch Halogen, $C_1$-$C_4$-Alkyl, —CN oder $—CF_3$ substituiert ist; und

$R_4$ für die Gruppe $—Si(R_{11})(R_{12})(R_{13})$ steht; worin

$R_{11}$, $R_{12}$ und $R_{13}$ unabhängig voneinander für einen gegebenenfalls ein- oder mehrfach durch Halogen substituierten Rest aus der Gruppe $C_1$-$C_4$-Alkyl, $C_3$-$C_7$-Alkenyl oder Phenyl stehen;

sowie deren Säureadditionssalze und Metallsalzkomplexe.

2. Verbindungen nach Anspruch 1 der Formel I*

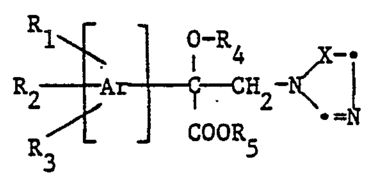 (I*)

worin

X für das Brückenglied —CH= oder —N= steht;

Ar eine Phenyl-, Diphenyl- oder Naphthylgruppe bedeutet;

$R_1$, $R_2$, $R_3$ unabhängig voneinander für Wasserstoff, Nitro, Halogen, $C_1$-$C_3$-Alkyl, $C_1$-$C_3$-Alkoxy oder $C_1$-$C_3$-Haloalkyl stehen;

$R_5$ $C_1$-$C_4$-Alkyl, Phenyl, ein durch, Halogen oder Methyl substituiertes Phenyl oder Benzyl bedeutet;

$R_4$ für die Gruppe $—Si(R_{11})(R_{12})(R_{13})$ steht, worin $R_{11}$, $R_{12}$ und $R_{13}$ unabhängig voneinander für einen gegebenenfalls ein- oder mehrfach durch Halogen substituierten Rest aus der Gruppe $C_1$-$C_4$-Alkyl, $C_3$-$C_7$-Alkenyl oder Phenyl stehen;

unter Einschluss der pflanzenverträglichen Säureadditionsalze sowie deren Metallsalzkomplexe.

3. Verbindungen der Formel I nach Anspruch 1, worin X für das Brückenglied —CH= oder =N— steht; Ar einen Phenylgruppe bedeutet; $R_1$ in ortho-Position für Wasserstoff, Nitro, Halogen, $C_1$-$C_3$-Alkyl, $C_1$-$C_3$-Alkoxy oder $C_1$-$C_3$-Haloalkyl steht; $R_2$ in para-Position für Wasserstoff, Nitro, Halogen, $C_1$-$C_3$-Alkyl, $C_1$-$C_3$-Alkoxy oder $C_1$-$C_3$-Haloalkyl steht; $R_3$ Wasserstoff, Methyl oder Halogen bedeutet; R eine der Gruppen

$—COOR_5$, $—COSR_6$, 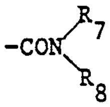

oder —CN darstellt ; $R_5$ $C_1$-$C_4$-Alkyl, Phenyl, ein durch Halogen Methyl substituiertes Phenyl oder ebenso substituiertes Benzyl bedeutet ; $R_6$ $C_1$-$C_{10}$-Alkyl oder eine unsubstituierte oder durch Halogen, $C_1$-$C_4$-Alkyl, $C_1$-$C_4$-Alkoxy, —CN oder —$CF_3$ substituierte Phenyl- oder Benzylgruppe bedeutet, $R_7$ und $R_8$ unabhängig voneinander für Wasserstoff, $C_1$-$C_3$-Alkyl, $C_3$-$C_7$-Cycloalkyl, Phenyl oder Benzyl stehen ; und $R_4$ für die Gruppe —Si($R_{11}$)($R_{12}$)($R_{13}$) steht ; worin $R_{11}$, $R_{12}$ und $R_{13}$ für gegebenenfalls durch Halogen substituiertes $C_1$-$C_4$-Alkyl oder Phenyl stehen ; wobei Säureadditionssalze sowie deren Metallsalzkomplexe.

4. Verbindungen der Formel I nach Anspruch 3, worin X für das Brückenglied —N = steht ;

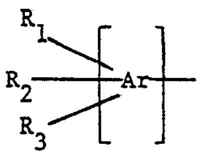

eine in ortho- und/oder para-Position durch Nitro, Fluor, Chlor, Brom, Methyl, Methoxy und/oder $CF_3$ substituierte Phenylgruppe bedeutet ; R für die Gruppe —$COOR_5$ steht ; $R_5$ $C_1$-$C_6$-Alkyl, Phenyl, ein durch, Chlor, Brom, Fluor oder Methyl substituiertes Phenyl oder Benzyl bedeutet ; und $R_4$ für die Gruppe —Si($R_{11}$) ($R_{12}$) ($R_{13}$) steht ; worin $R_{11}$, $R_{12}$ und $R_{13}$ für gegebenenfalls durch Halogen substituiertes $C_1$-$C_4$-Alkyl oder Phenyl stehen ; wobei deren Säureadditionssalze sowie Metallsalzkomplexe mit eingeschlossen sind.

5. Eine Verbindung der Formel I gemäss Anspruch 1, ausgewählt aus der Gruppe :
2-(1H-1,2,4-Triazolylmethyl-1'-yl)-2-trimethyl-silyloxy-2-chlor-4-bromphenylessigsäureethylester ;
2-(1H-1,2,4-Triazolylmethyl-1'-yl)-2-silyloxy-2-chlor-4-bromphenylessigsäuremethylester ;
2-(1H-1,2,4-Triazolylmethyl-1'-yl)-2-trimethyl-silyloxy-2,4-dibromphenylessigsäureethylester ;
2-(1H-1,2,4-Triazolylmethyl-1'-yl)-2-trimethylsilyloxy-2,4-dichlorphenylessigsäuremethylester ;
2-(1H-1,2,4-Triazolylmethyl-1'-yl)-2-trimethylsdilyloxy-2-chlor-4-bromphenylessigsäureethylester ;
2-(1H-1,2,4-Triazolylmethyl-1'-yl)-2-dimethylchlormethylsilyloxy-2-chlor-4-bromphenylessigsäuremethylester ;.
2-(1H-1,2,4-Triazolylmethyl-1'-yl)-2-trimethylsilyloxy-2,4-dichlorphenylessigsäureethylester ;
2-(1H-1,2,4-Triazolylmethyl-1'-yl)-2-trimethylsilyloxy-2,4-dichlorphenylessigsäureisopropylester ;
2-(1H-1,2,4-Triazolylmethyl-1'-yl)-2-dimethyl-allylsilyloxy-2-chlor-4-bromphenylessigsäureethylester.

6. Die Metallsalzkomplexe mit Verbindungen der Formel I nach einem der Ansprüche 1 bis 5, mit den Metallen Kupfer, Zink, Mangan oder Zinn.

7. Verfahren zur Herstellung der in Anspruch 1 definierten Silyloxyalkanazole der Formel I, dadurch gekennzeichnet, dass man einen Alkohol der Formel II

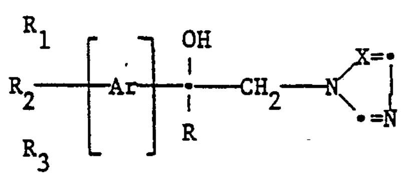 (II)

in An- oder Abwesenheit eines reaktionsinerten organischen Lösungs- oder Verdünnungsmittels, bei Temperaturen von − 20° bis + 150 °C und in Gegenwart einer organischen oder anorganischen Base mit einem Halosilan der Formel III

Hal—$R_4$ (III)

zur Reaktion bringt, wobei die Substituenten in den Formeln II und III wie unter Formel I definiert sind und Hal für ein Halogenatom steht, und, wenn erwünscht, eine verfahrensgemäss erhältliche Verbindung in ein Säureadditionssalz umwandelt, ein Verfahrensgemäss erhältliches Säureadditionssalz in die « freie » Verbindung oder ein anderes Säureadditionssalz umwandelt, oder eine verfahrensgemäss erhältliche Verbindung bzw. ein verfahrensgemäss erhältliches Salz in einen Metallsalzkomplex überführt.

8. Schädlingsbekämpfungsmittel zur Bekämpfung oder Verhütung eines Befalls durch Mikroorganismen, dadurch gekennzeichnet, dass es als mindestens eine aktive Komponente eine Verbindung der Formel I gemäss einem der Ansprüche 1 bis 8 enthält, zusammen mit Trägerstoffen.

9. Verfahren zur Bekämpfung oder Verhütung eines Befalls von Kulturpflanzen durch phytopathogene Mikroorganismen, dadurch gekennzeichnet, dass man eine Verbindung der Formel I gemäss einem der Ansprüche 1 bis 6 auf die Pflanze oder deren Standort appliziert.

10. Verfahren zur Herstellung eines in Anspruch 8 definierten Schädlingsbekämpfungsmittels, dadurch gekennzeichnet, dass mindestens eine Verbindung der Formel I nach Anspruch 1 mit geeigneten festen und/oder flüssigen Trägerstoffen und/oder Tensiden innig vermischt wird.

**Patentansprüche** (für den Vertragsstaat AT)

1. Schädlingsbekämpfungsmittel zur Bekämpfung oder Verhütung eines Befalls durch Mikroorganismen, dadurch gekennzeichnet, dass es als mindestens eine aktive Komponente zusammen mit üblichen Trägerstoffen eine Verbindung der Formel I

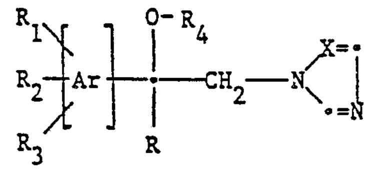

(I)

enthält, worin

X für das Brückenglied —CH= oder —N= steht ;

Ar eine Phenyl-, Diphenyl- oder Naphthylgruppe bedeutet ;

$R_1$, $R_2$, $R_3$ unabhängig voneinander für Wasserstoff, Nitro, Halogen, $C_1$-$C_3$-Alkyl, $C_1$-$C_3$-Alkoxy oder $C_1$-$C_3$-Haloalkyl stehen ;

R eine der Gruppen

—$COOR_5$, —$COSR_6$, 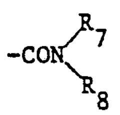

oder —CN darstellt ;

$R_5$ ein unsubstituiertes oder durch Halogen substituiertes $C_2$-$C_{10}$ Alkenyl ; ein unsubstituiertes oder durch Halogen substituiertes $C_2$-$C_{10}$-Alkinyl ; oder eine $C_3$-$C_8$-Cycloalkylgruppe oder eine unsubstituierte oder durch Halogen, $C_1$-$C_4$-Alkyl, $C_1$-$C_4$-Alkoxy, —CN oder —$CF_3$ substituierte Phenylgruppe bedeutet ; oder aber eine $C_1$-$C_{12}$-Alkylkette darstellt, die ab $C_2$-Alkyl durch Sauerstoff oder Schwefel unterbrochen und die unsubstituiert oder durch eine der folgenden Atome oder Gruppen substituiert sein kann : Halogen, Phenyl, —COOAlkyl($C_1$-$C_4$), —COAlkyl($C_1$-$C_4$), —COPhenyl, einen ungesättigten oder gesättigten 5- oder 6-gliedrigen Ring mit Sauerstoff oder Schwefel als Heteroatom, wobei jeder Phenylrest unsubstituiert oder ein- oder mehrfach durch gleiche oder verschiedene Halogenatome substituiert ist ;

$R_6$ $C_1$-$C_{10}$-Alkyl oder eine unsubstituierte oder durch Halogen, $C_1$-$C_4$-Alkyl, $C_1$-$C_4$-Alkoxy, —CN oder —$CF_3$ substituierte Phenyl- oder Benzylgruppe bedeutet ;

$R_7$ und $R_8$ unabhängig voneinander Wasserstoff, $C_1$-$C_6$-Alkyl, $C_3$-$C_7$-Cycloalkyl oder eine Phenyl- oder Benzylgruppe darstellen, bei denen jeweils der aromatische Ring unsubstituiert oder durch Halogen, $C_1$-$C_4$-Alkyl, $C_1$-$C_4$-Alkoxy, —CN oder —$CF_3$ substituiert ist, oder wobei einer der Substituenten $R_7$ oder $R_8$ auch die Gruppe —N($R_9$)($R_{10}$) bedeutet oder wobei die Substituenten $R_7$ und $R_8$ zusammen einen 5- oder 6-gliedrigen gesättigten oder ungesättigten heterocyclischen Ring bilden, der noch 1 oder 2 weitere N-Atome enthalten kann ;

$R_9$ und $R_{10}$ unabhängig voneinander Wasserstoff, $C_1$-$C_4$-Alkyl oder einen Phenylrest bedeuten, der unsubstituiert oder durch Halogen, $C_1$-$C_4$-Alkyl, —CN oder —$CF_3$ substituiert ist ; und

$R_4$ für die Gruppe —Si($R_{11}$)($R_{12}$)($R_{13}$) steht ; worin

$R_{11}$, $R_{12}$ und $R_{13}$ unabhängig voneinander für einen gegebenenfalls ein- oder mehrfach durch Halogen substituierten Rest aus der Gruppe $C_1$-$C_4$-Alkyl, $C_3$-$C_7$-Alkenyl oder Phenyl stehen ;

sowie deren Säureadditionssalze und Metallsalzkomplexe.

2. Mittel nach Anspruch 1, enthaltend als aktive Komponente eine Verbindung der Formel I*

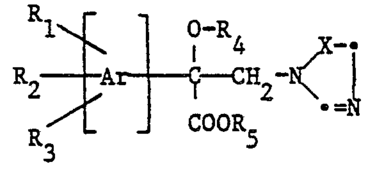

(I*),

worin

X für das Brückenglied —CH= oder —N= steht ;

Ar eine Phenyl-, Diphenyl- oder Naphthylgruppe bedeutet ;

$R_1$, $R_2$, $R_3$ unabhängig voneinander für Wasserstoff, Nitro, Halogen, $C_1$-$C_3$-Alkyl, $C_1$-$C_3$-Alkoxy oder $C_1$-$C_3$-Haloalkyl stehen ;

$R_5$ $C_1$-$C_4$-Alkyl, Phenyl, ein durch, Halogen oder Methyl substituiertes Phenyl oder Benzyl bedeutet ;

$R_4$ für die Gruppe —Si($R_{11}$)($R_{12}$)($R_{13}$) steht, worin $R_{11}$, $R_{12}$ und $R_{13}$ unabhängig voneinander für

einen gegebenenfalls ein- oder mehrfach durch Halogen substituierten Rest aus der Gruppe $C_1$-$C_4$-Alkyl, $C_3$-$C_7$-Alkenyl oder Phenyl stehen ;
unter Einschluss der pflanzenverträglichen Säureadditionssalze sowie deren Metallsalzkomplexe.

3. Mittel nach Anspruch 1, enthaltend als aktive Komponente eineVerbindung der Formel I, worin X für das Brückenglied —CH= oder =N— steht ; Ar eine Phenylgruppe bedeutet ; $R_1$ in ortho-Position für Wasserstoff, Nitro, Halogen, $C_1$-$C_3$-Alkyl, $C_1$-$C_3$-Alkoxy oder $C_1$-$C_3$-Haloalkyl steht ; $R_2$ in para-Position für Wasserstoff, Nitro, Halogen, $C_1$-$C_3$-Alkyl, $C_1$-$C_3$-Alkoxy oder $C_1$-$C_3$-Haloalkyl steht ; $R_3$ Wasserstoff, Methyl oder Halogen bedeutet ; R eine der Gruppen

—$COOR_5$, —$COSR_6$, 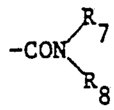

oder —CN darstellt ; $R_5$ $C_1$-$C_4$-Alkyl, Phenyl, ein durch, Halogen oder Methyl substituiertes Phenyl oder Benzyl bedeutet ; $R_6$ $C_1$-$C_{10}$-Alkyl oder eine unsubstituierte oder durch Halogen, $C_1$-$C_4$-Alkyl, $C_1$-$C_4$-Alkoxy, —CN oder -$CF_3$ substituierte Phenyl- oder Benzylgruppe bedeutet, $R_7$ und $R_8$ unabhängig voneinander für Wasserstoff, $C_1$-$C_3$-Alkyl, $C_3$-$C_7$-Cycloalkyl, Phenyl oder Benzyl stehen ; und $R_4$ für die Gruppe —$Si(R_{11})(R_{12})(R_{13})$ steht ; worin $R_{11}$, $R_{12}$ und $R_{13}$ für gegebenenfalls durch Halogen substituiertes $C_1$-$C_4$-Alkyl oder Phenyl stehen ; wobei Säureadditionssalze sowie Metallkomplexe der Formel I mit eingeschlossen sind.

4. Mittel nach Anspruch 3, enthaltend als aktive Komponente eine Verbindung der Formel I,worin X für das Brückenglied —N= steht ;

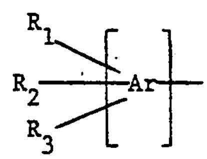

eine in ortho- und/oder para-Position durch Nitro, Fluor, Chlor, Brom, Methyl, Methoxy und/oder $CF_3$ substituierte Phenylgruppe bedeutet ; R für die Gruppe —$COOR_5$ steht ; $R_5$ $C_1$-$C_6$-Alkyl, Phenyl, ein durch Chlor, Brom, Fluor oder Methyl substituiertes Phenyl oder Benzyl bedeutet ; und $R_4$ für die Gruppe —$Si(R_{11})(R_{12})(R_{13})$ steht ; worin $R_{11}$, $R_{12}$ und $R_{13}$ für gegebenenfalls durch Halogen substituiertes $C_1$-$C_4$-Alkyl oder Phenyl stehen ; wobei Säureadditionssalze, quaternäre Azolium- und Ammoniumsalze sowie Metallkomplexe der Formel I mit eingeschlossen sind.

5. Mittel nach Anspruch 1, enthaltend als aktive Komponente eine der nachfolgend genannten Verbindungen der Formel I, nämlich

2-(1H-1,2,4-Triazolylmethyl-1'-yl)-2-trimethyl-silyloxy-2-chlor-4-bromphenylessigsäureethylester ;
2-(1H-1,2,4-Triazolylmethyl-1'-yl)-2-trimethyl-silyloxy-2-chlor-4-bromphenylessigsäuremethylester ;
2-(1H-1,2,4-Triazolylmethyl-1'-yl)-2-trimethyl-silyloxy-2,4-dibromphenylessigsäureethylester ;
2-(1H-1,2,4-Triazolylmethyl-1'-yl)-2-trimethylsilyloxy-2,4-dichlorphenylessigsäuremethylester ;
2-(1H-1,2,4-Triazolylmethyl-1'-yl)-2-trimethylsilyloxy-2-chlor-4-bromphenylessigsäureethylester ;
2-(1H-1,2,4-Triazolylmethyl-1'-yl)-2-dimethylchlormethylsilyloxy-2-chlor-4-bromphenylessigsäuremethylester ;
2-(1H-1,2,4-Triazolylmethyl-1'-yl)-2-trimethylsilyloxy-2,4-dichlorphenylessigsäureethylester ;
2-(1H-1,2,4-Triazolylmethyl-1'-yl)-2-trimethylsilyloxy-2,4-dichlorphenylessigsäureisopropylester ;
2-(1H-1,2,4-Triazolylmethyl-1'-yl)-2-dimethyl-allylsilyloxy-2-chlor-4-bromphenylessigsäureethylester.

6. Die Metallsalzkomplexe der Formel I nach einem der Ansprüche 1 bis 7, mit den Metallen Kupfer, Zink, Mangan oder Zinn.

7. Verfahren zur Herstellung der in Anspruch 1 definierten Silyloxy-alkanazole der Formel I, dadurch gekennzeichnet, dass man einen Alkohol der Formel II

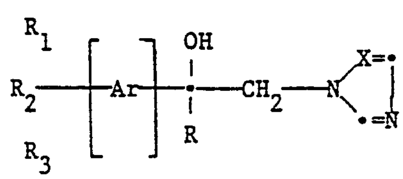

(II)

in An- oder Abwesenheit eines reaktionsinerten organischen Lösungs- oder Verdünnungsmittels, bei Temperaturen von − 20° bis + 150 °C und in Gegenwart einer organischen oder anorganischen Base mit einem Halosilan der Formel III

Hal—$R_4$ (III)

zur Reaktion bringt, wobei die Substituenten in den Formeln II und III wie unter Formel I definiert sind und Hal für ein Halogenatom steht, und, wenn erwünscht, eine verfahrensgemäss erhältliche Verbindung in ein Säureadditionssalz umwandelt, ein verfahrensgemäss erhältliches Säureadditionssalz in die « freie » Verbindung oder ein anderes Säureadditionssalz umwandelt, oder eine verfahrensgemäss erhältliche Verbindung bzw. ein verfahrensgemäss erhältliches Salz in einen Metallsalzkomplex überführt.

8. Verfahren zur Bekämpfung oder Verhütung eines Befalls von Kulturpflanzen durch phytopathogene Mikroorganismen, dadurch gekennzeichnet, dass man eine Verbindung der Formel I gemäss einem der Ansprüche 1 bis 6 auf die Pflanze oder deren Standort appliziert.

9. Verfahren zur Herstellung eines wie in Anspruch 1 definierten Schädlingsbekämpfungsmittels, dadurch gekennzeichnet, dass mindestens eine Verbindung der Formel I nach Anspruch 1 mit geeigneten festen und/oder flüssigen Trägerstoffen und/oder Tensiden innig vermischt wird.

**Claims** (for the Contracting States : DE, GB, FR, CH, LI, IT, NL, BE, SE)

1. A silyloxyalkane azole of the formula I

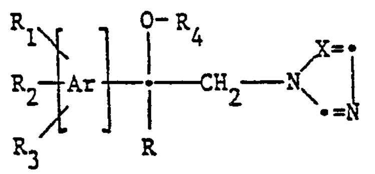

(I)

wherein

X is the bridge member —CH= or —N=,

Ar is a phenyl, diphenyl or naphthyl group,

$R_1$, $R_2$ and $R_3$ independently of one another are hydrogen, nitro, halogen, $C_1$-$C_3$-alkyl, $C_1$-$C_3$-alkoxy or $C_1$-$C_3$-haloalkyl,

R is one of the groups

—$COOR_5$, —$COSR_6$, 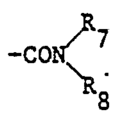

or —CN, $R_5$ is $C_2$-$C_{10}$-alkenyl which is unsubstituted or substituted by halogen ; $C_1$-$C_{10}$-alkynyl which is unsubstituted or substituted by halogen ; or is a $C_3$-$C_8$-cycloalkyl group or a phenyl group which is unsubstituted or substituted by halogen, $C_1$-$C_4$-alkyl, $C_1$-$C_4$-alkoxy, —CN or —$CF_3$ ; or is a $C_1$-$C_{12}$-alkyl chain which from $C_2$ alkyl may be interrupted by oxygen or sulfur and is unsubstituted or substituted by a member selected from the group consisting of halogen, phenyl, —COO-$C_1$-$C_4$-alkyl, —CO-$C_1$-$C_4$-alkyl, —CO-phenyl, an unsaturated or saturated 5- or 6-membered ring containing oxygen or sulfur as heteroatom, with each phenyl moiety being unsubstituted or substituted by one or more identical or different halogen atoms,

$R_6$ is $C_1$-$C_{10}$-alkyl, or is a phenyl or benzyl group, each unsubstituted or substituted by halogen, $C_1$-$C_4$-alkyl, $C_1$-$C_4$-alkoxy, —CN or —$CF_3$,

$R_7$ and $R_8$, each independently of the other, are hydrogen, $C_1$-$C_6$-alkyl, $C_3$-$C_7$-cycloalkyl, or a phenyl or benzyl group in each of which the aromatic ring is unsubstituted or substituted by halogen, $C_1$-$C_4$-alkyl, $C_1$-$C_4$-alkoxy, —CN or —$CF_3$, or one of $R_7$ and $R_8$ is also the —$N(R_9)(R_{10})$ group or both taken together form a 5- or 6-membered saturated or unsaturated heterocyclic ring which may additionally contain 1 or 2 further N atoms,

$R_9$ and $R_{10}$, each independently of the other, are hydrogen, $C_1$-$C_4$-alkyl or a phenyl radical which is unsubstituted or substituted by halogen, $C_1$-$C_4$-alkyl, —CN or —$CF_3$ ; and

$R_4$ is the —$Si(R_{11})(R_{12})(R_{13})$ group, wherein each of $R_{11}$, $R_{12}$ and $R_{13}$ independently is a radical selected from $C_1$-$C_4$-alkyl, $C_3$-$C_7$-alkenyl or phenyl, each unsubstituted or substituted by one or more halogen atoms,

or an acid addition salt or metal salt complex thereof.

2. A compound according to claim 1 of the formula I*

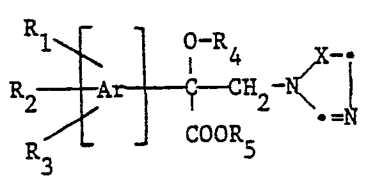

(I*),

wherein
X is the bridge member —CH= or —N=,
Ar is a phenyl, diphenyl or naphthyl group,
$R_1$, $R_2$ and $R_3$, each independently of the other, are hydrogen, nitro, halogen, $C_1$-$C_3$-alkyl, $C_1$-$C_3$-alkoxy or $C_1$-$C_3$-haloalkyl,
$R_5$ is $C_1$-$C_4$-alkyl, phenyl, or phenyl or benzyl, each substituted by halogen or methyl,
$R_4$ is the —Si($R_{11}$)($R_{12}$)($R_{13}$) group, wherein each of $R_{11}$, $R_{12}$ and $R_{13}$ independently is a radical selected from $C_1$-$C_4$-alkyl, $C_3$-$C_7$-alkenyl or phenyl, each unsubstituted or substituted by one or more halogen atoms,
or an agriculturally suitable acid addition salt or metal salt complex thereof.

3. A compound of the formula I according to claim 1, wherein X is the bridge member —CH= or —N= ; Ar is a phenyl group ; $R_1$ in the orthoposition is hydrogen, nitro, halogen, $C_1$-$C_3$-alkyl, $C_1$-$C_3$-alkoxy, or $C_1$-$C_3$-haloalkyl ; $R_2$ in the para-position is hydrogen, nitro, halogen $C_1$-$C_3$-alkyl, $C_1$-$C_3$-alkoxy or $C_1$-$C_3$-haloalkyl ; $R_3$ is hydrogen, methyl or halogen ; R is a group —COOR$_5$, —COSR$_6$,

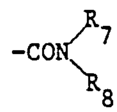

or —CN ; $R_5$ is $C_1$-$C_4$-alkyl, phenyl, phenyl or benzyl, each substituted by halogen or methyl ; $R_6$ is $C_1$-$C_{10}$-alkyl or phenyl or benzyl, each unsubstituted or substituted by halogen, $C_1$-$C_4$-alkyl, $C_1$-$C_4$-alkoxy, —CN or —CF$_3$ ; each of $R_7$ and $R_8$ independently is hydrogen, $C_1$-$C_3$-alkyl, $C_3$-$C_7$-cycloalkyl, phenyl or benzyl ; and $R_4$ is the —Si($R_{11}$)($R_{12}$)($R_{13}$) group, wherein each of $R_{11}$, $R_{12}$ and $R_{13}$ independently is $C_1$-$C_4$-alkyl or phenyl each unsubstituted or substituted by halogen ; or an acid addition salt or metal salt complex thereof.

4. A compound of the formula I according to claim 3, wherein X is the bridge member —N= ; the grouping

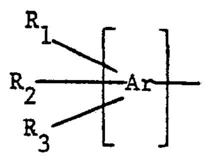

is a phenyl group which is substituted in the ortho- and/or paraposition by nitro, fluorine, chlorine, bromine, methyl, methoxy and/or CF$_3$ ; R is the —COOR$_5$ group ; $R_5$ is $C_1$-$C_6$ alkyl, phenyl, or phenyl or benzyl, each substituted by chlorine, bromine, fluorine or methyl ; and $R_4$ is the —Si($R_{11}$)($R_{12}$)($R_{13}$) group, wherein each of $R_{11}$, $R_{12}$ and $R_{13}$ independently is $C_1$-$C_4$-alkyl or phenyl, each unsubstituted or substituted by halogen, or an acid addition salt or metal salt complex thereof.

5. A compound of the formula I according to claim 1, selected from the group consisting of :
ethyl 2-(1H-1,2,4-triazolylmethyl-1'-yl)-2-trimethylsilyloxy-2-chloro-4-bromophenylacetate,
methyl 2-(1H-1,2,4-triazolylmethyl-1'-yl)-2-trimethylsilyloxy-2-chloro-4-bromophenylacetate,
ethyl 2-(1H-1,2,4-triazolylmethyl-1'-yl)-2-trimethylsilyloxy-2,4-dibromophenylacetate,
methyl 2-(1H-1,2,4-triazolylmethyl-1'-yl)-2-trimethylsilyloxy-2,4-dichlorophenylacetate,
ethyl 2-(1H-1,2,4-triazolylmethyl-1'-yl)-2-trimethylsilyloxy-2-chloro-4-bromophenylacetate,
methyl 2-(1H-1,2,4-triazolylmethyl-1'-yl)-2-dimethylchloromethylsilyloxy-2-chloro-4-bromophenylacetate,
ethyl 2-(1H-1,2,4-triazolylmethyl-1'-yl)-2-trimethylsilyloxy-2,4-dichlorophenylacetate,
isopropyl 2-(1H-1,2,4-triazolylmethyl-1'-yl)-2-trimethylsilyloxy-2,4-dichlorophenylacetate,
ethyl 2-(1H-1,2,4-triazolylmethyl-1'-yl)-2-dimethylallylsilyloxy-2-chloro-4-bromophenylacetate.

6. A metal salt complex with compounds of the formula I according to any one of claims 1 to 5 with copper, zinc, manganese or tin.

7. A process for the preparation of a silyloxyalkane azole of the formula I as defined in claim 1, which comprises reacting an alcohol of the formula II

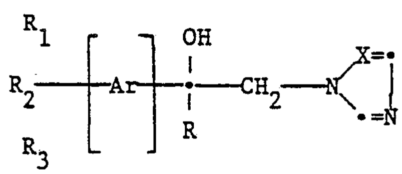

(II)

wherein R, $R_1$, $R_2$, $R_3$ Ar and X are as defined for formula I, with a halosilane of the formula III

Hal—$R_4$ (III)

wherein Hal is a halogen atom and $R_4$ is as defined for formula I, in the presence or absence of an inert organic solvent or diluent, in the temperature range from − 20 °C to + 150 °C and in the presence of an organic or inorganic base, and, if desired, converting a compound obtainable by the process into an acid addition salt, or converting an acid addition salt obtainable by the process into the « free » compound or into another acid addition salt, or converting a compound or a salt obtainable by the process of the invention into a metal salt complex.

8. A pesticidal composition for controlling microorganisms or preventing infestation by such microorganisms, which composition contains at least one compound of the formula I as claimed in any one of claims 1 to 6, together with suitable carriers therefor.

9. A method of controlling phytopathogenic microorganisms or of protecting cultivated plants from attack by such microorganisms, which comprises applying to said plants or to the locus thereof a microbicidally effective amount of a compound of the formula I as claimed in any one of claims 1 to 6.

10. A process for the preparation of a pesticidal composition as defined in claim 8, which comprises intimately mixing at least one compound of the formula I as claimed in claim 1 with suitable solid and/or liquid carriers and/or surfactants.

**Claims** (for the Contracting State AT)

1. A pesticidal composition for controlling microorganisms or preventing infestation by such microorganisms, which composition contains, as active ingredient, at least one compound of the formula I

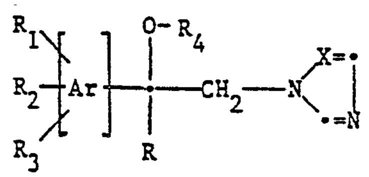

(I)

wherein

X is the bridge member —CH= or —N=,

Ar is a phenyl, diphenyl or naphthyl group,

$R_1$, $R_2$ and $R_3$ independently of one another are hydrogen, nitro, halogen, $C_1$-$C_3$-alkyl, $C_1$-$C_3$-alkoxy or $C_1$-$C_3$-haloalkyl,

R is one of the groups

—$COOR_5$, —$COSR_6$, 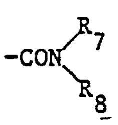

or —CN,

$R_5$ is $C_2$-$C_{10}$-alkenyl which is unsubstituted or substituted by halogen ; $C_2$-$C_{10}$-alkynyl which is unsubstituted or substituted by halogen ; or is a $C_3$-$C_8$-cycloalkyl group or a phenyl group which is unsubstituted or substituted by halogen, $C_1$-$C_4$-alkyl, $C_1$-$C_4$-alkoxy, —CN or —$CF_3$ ; or is a $C_1$-$C_{12}$-alkyl chain which from $C_2$-alkyl may be interrupted by oxygen or sulfur and is unsubstituted or substituted by a member selected from the group consisting of halogen, phenyl, —COO-$C_1$-$C_4$-alkyl, —CO-$C_1$-$C_4$-alkyl, —CO-phenyl, an unsaturated or saturated 5- or 6-membered ring containing oxygen or sulfur as heteroatom, with each phenyl moiety being unsubstituted or substituted by one or more identical or different halogen atoms,

$R_6$ is $C_1$-$C_{10}$-alkyl, or is a phenyl or benzyl group, each unsubstituted or substituted by halogen, $C_1$-$C_4$-alkyl, $C_1$-$C_4$-alkoxy, —CN or —$CF_3$,

$R_7$ and $R_8$, each independently of the other, are hydrogen, $C_1$-$C_6$-alkyl, $C_3$-$C_7$-cycloalkyl, or a phenyl or benzyl group in each of which the aromatic ring is unsubstituted or substituted by halogen, $C_1$-$C_4$-alkyl, $C_1$-$C_4$-alkoxy, —CN or —$CF_3$, or one of $R_7$ and $R_8$ is also the —N($R_9$)($R_{10}$) group or both taken together form a 5- or 6-membered saturated or unsaturated heterocyclic ring which may additionally contain 1 or 2 further N atoms,

$R_9$ and $R_{10}$, each independently of the other, are hydrogen, $C_1$-$C_4$-alkyl or a phenyl radical which is unsubstituted or substituted by halogen, $C_1$-$C_4$-alkyl, —CN or —$CF_3$ ; and

$R_4$ is the —Si($R_{11}$)($R_{12}$)($R_{13}$) group, wherein each of $R_{11}$, $R_{12}$ and $R_{13}$ independently is a radical selected from $C_1$-$C_4$-alkyl, $C_3$-$C_7$ alkenyl or phenyl, each unsubstituted or substituted by one or more halogen atoms,

or an acid addition salt or metal salt complex thereof, together with conventional carriers.

2. A composition according to claim 1, which contains, as active ingredient, a compound of the formula 1*

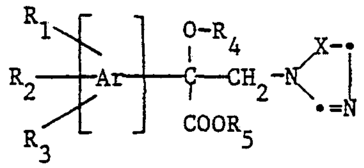

(I*),

wherein

X is the bridge member —CH= or —N=,

Ar is a phenyl, diphenyl or naphthyl group,

$R_1$, $R_2$ and $R_3$, each independently of the other, are hydrogen, nitro, halogen, $C_1$-$C_3$-alkyl, $C_1$-$C_3$-alkoxy or $C_1$-$C_3$-haloalkyl,

$R_5$ is $C_1$-$C_4$-alkyl, phenyl, or phenyl or benzyl, each substituted by halogen or methyl,

$R_4$ is the —$Si(R_{11})(R_{12})(R_{13})$ group, wherein each of $R_{11}$, $R_{12}$ and $R_{13}$ independently is a radical selected from $C_1$-$C_4$-alkyl, $C_3$-$C_7$-alkenyl or phenyl, each unsubstituted or substituted by one or more halogen atoms,

or an agriculturally suitable acid addition salt or metal salt complex thereof.

3. A composition according to claim 1, which contains, as active ingredient, a compound of the formula I, wherein X is the bridge member —CH= or —N= ; Ar is a phenyl group ; $R_1$ in the orthoposition is hydrogen, nitro, halogen, $C_1$-$C_3$-alkyl, $C_1$-$C_3$-alkoxy, or $C_1$-$C_3$-haloalkyl ; $R_2$ in the para-position is hydrogen, nitro, halogen $C_1$-$C_3$-alkyl, $C_1$-$C_3$-alkoxy or $C_1$-$C_3$-haloalkyl ; $R_3$ is hydrogen, methyl or halogen ; R is a group

—$COOR_5$, —$COSR_6$, 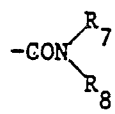

or —CN ; $R_5$ is $C_1$-$C_4$-alkyl, phenyl, phenyl or benzyl, each substituted by halogen or methyl ; $R_6$ is $C_1$-$C_{10}$-alkyl or phenyl or benzyl, each unsubstituted or substituted by halogen, $C_1$-$C_4$-alkyl, $C_1$-$C_4$-alkoxy, —CN or —$CF_3$ ; each of $R_7$ and $R_8$ independently is hydrogen, $C_1$-$C_3$-alkyl, $C_3$-$C_7$-cycloalkyl, phenyl or benzyl ; and $R_4$ is the —$Si(R_{11})(R_{12})(R_{13})$ group, wherein each of $R_{11}$, $R_{12}$ and $R_{13}$ independently is $C_1$-$C_4$-alkyl or phenyl each unsubstituted or substituted by halogen ; or an acid addition salt or metal salt complex thereof.

4. A composition according to claim 3, which contains, as active ingredient, a compound of the formula I, wherein X is the bridge member —N= ; the grouping

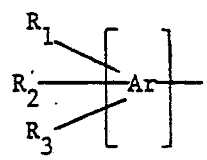

is a phenyl group which is substituted in the ortho- and/or paraposition by nitro, fluorine, chlorine, bromine, methyl, methoxy and/or $CF_3$ ; R is the —$COOR_5$ group ; $R_5$ is $C_1$-$C_6$-alkyl, phenyl, or phenyl or benzyl, each substituted by chlorine, bromine, fluorine or methyl ; and $R_4$ is the —$Si(R_{11})(R_{12})(R_{13})$ group, wherein each of $R_{11}$, $R_{12}$ and $R_{13}$ independently is $C_1$-$C_4$-alkyl or phenyl, each unsubstituted or substituted by halogen, or an acid addition salt, a quaternary azolium or ammonium salt or a metal salt complex thereof.

5. A composition according to claim 1, which contains, as active ingredient, a compound of the formula I according to claim 1, selected from the group consisting of :

ethyl 2-(1H-1,2,4-triazolylmethyl-1'-yl)-2-trimethylsilyloxy-2-chloro-4-bromophenylacetate,
methyl 2-(1H-1,2,4-triazolylmethyl-1'-yl)-2-trimethylsilyloxy-2-chloro-4-bromophenylacetate,
ethyl 2-(1H-1,2,4-triazolylmethyl-1'-yl)-2-trimethylsilyloxy-2,4-dibromophenylacetate,
methyl 2-(1H-1,2,4-triazolylmethyl-1'-yl)-2-trimethylsilyloxy-2,4-dichlorophenylacetate,
ethyl 2-(1H-1,2,4-triazolylmethyl-1'-yl)-2-trimethylsilyloxy-2-chloro-4-bromophenylacetate,
methyl 2-(1H-1,2,4-triazolylmethyl-1'-yl)-2-dimethylchloromethylsilyloxy-2-chloro-4-bromophenylacetate,
ethyl 2-(1H-1,2,4-triazolylmethyl-1'-yl)-2-trimethylsilyloxy-2,4-dichlorophenylacetate,
isopropyl 2-(1H-1,2,4-triazolylmethyl-1'-yl)-2-trimethylsilyloxy-2,4-dichlorophenylacetate,
ethyl 2-(1H-1,2,4-triazolylmethyl-1'-yl)-2-dimethylallylsilyloxy-2-chloro-4-bromophenylacetate.

6. A metal salt complex of the formula I according to any one of claims 1 to 5 with copper, zinc, manganese or tin.

7. A process for the preparation of a silyloxyalkane azole of the formula I as defined in claim 1, which comprises reacting an alcohol of the formula II

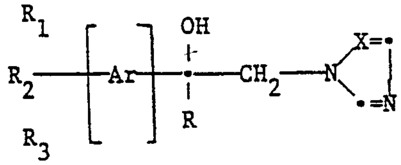

(II)

wherein R, $R_1$, $R_2$, $R_3$, Ar and X are as defined for formula I, with a halosilane of the formula III

$$Hal—R_4 \qquad (III)$$

wherein Hal is a halogen atom and $R_4$ is as defined for formula I, in the presence or absence of an inert organic solvent or diluent, in the temperature range from − 20 °C to + 150 °C and in the presence of an organic or inorganic base, and, if desired, converting a compound obtainable by the process into an acid addition salt, or converting an acid addition salt obtainable by the process into the « free » compound or into another acid addition salt, or converting a compound or a salt obtainable by the process of the invention into a metal salt complex.

8. A method of controlling phytopathogenic microorganisms or of protecting cultivated plants from attack by such microorganisms, which comprises applying to said plants or to the locus thereof a microbicidally effective amount of a compound of the formula I as claimed in any one of claims 1 to 6.

9. A process for the preparation of a pesticidal composition as defined in claim 1, which comprises intimately mixing at least one compound of the formula I as claimed in claim 1 with suitable solid and/or liquid carriers and/or surfactants.

**Revendications** (pour les Etats contractants : DE, GB, FR, CH, LI, IT, NL, BE, SE)

1. Silyloxyalcane-azoles de formule I

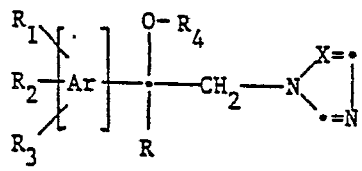

(I)

dans laquelle

X représente un pont —CH = ou —N = ;

Ar représente un groupe phényle, diphényle ou naphtyle ;

$R_1$, $R_2$ et $R_3$ représentent chacun, indépendamment les uns des autres, l'hydrogène, un groupe nitro, un halogène, un groupe alkyle en C1-C3, alcoxy en C1-C3 ou halogénoalkyle en C1-C3 ;

R représente l'un des groupes

—$COOR_5$, —$COSR_6$, 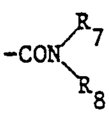

ou —CN ;

$R_5$ représente un groupe alcényle en C2-C10 non substitué ou substitué par des halogènes ; un groupe alcynyle en C2-C10 non substitué ou substitué par des halogènes ; ou un groupe cycloalkyle en C3-C8 ou un groupe phényle non substitué ou substitué par des halogènes, des groupes alkyle en C1-C4, alcoxy en C1-C4, —CN ou —$CF_3$ ; ou encore une chaîne alkyle en C1-C12 qui, à partir de la chaîne alkyle en C2, peut être interrompue par l'oxygène ou le soufre et qui peut être non substituée ou substituée par l'un des atomes ou groupes suivants : halogène, phényle, —COO(alkyle en C1-C4), —CO(alkyle en C1-C4), —CO-phényle, un cycle insaturé ou saturé à 5 ou 6 chaînons contenant l'oxygène ou le soufre en tant qu'héréroatome, chaque groupe phényle étant non substitué ou mono- ou poly-substitué par des atomes d'halogènes identiques ou différents ;

$R_6$ représente un groupe alkyle en C1-C10 ou un groupe phényle ou benzyle non substitué ou substitué par des halogènes, des groupes alkyle en C1-C4, alcoxy en C1-C4, —CN ou —$CF_3$ ;

$R_7$ et $R_8$ représentent chacun, indépendamment l'un de l'autre, l'hydrogène, un groupe alkyle en C1-C6, cycloalkyle en C3-C7 ou un groupe phényle ou benzyle dans lesquels le cycle aromatique peut être

non substitué ou substitué par des halogènes, des groupes alkyle en C1-C4, alcoxy en C1-C4, —CN ou —$CF_3$, ou bien l'un des symboles $R_7$ ou $R_8$ représente le groupe —$N(R_9)(R_{10})$ ou bien les symboles $R_7$ et $R_8$ représentent ensemble un noyau hétérocyclique saturé ou insaturé à 5 ou 6 chaînons qui peut encore contenir un ou deux autres atomes d'azote ;

$R_9$ et $R_{10}$ représentent chacun, indépendamment l'un de l'autre, l'hydrogène, un groupe alkyle en C1-C4 ou phényle non substitué ou substitué par des halogènes, des groupes alkyle en C1-C4, —CN ou —$CF_3$ ; et

$R_4$ représente le groupe —$Si(R_{11})(R_{12})(R_{13})$ dans lequel

$R_{11}$, $R_{12}$ et $R_{13}$ représentent chacun, indépendamment les uns des autres, un reste du groupe alkyle en C1-C4, alcényle en C3-C7 ou phényle éventuellement mono ou poly-substitué par des halogènes ; ainsi que leurs sels formés par addition avec des acides et complexes de sels métalliques.

2. Composés selon la revendication 1 de formule I

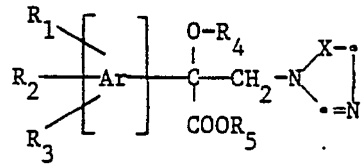

(I*),

dans laquelle

X représente le pont —CH = ou —N = ;

Ar représente un groupe phényle, diphényle ou naphtyle ;

$R_1$, $R_2$ et $R_3$ représentent chacun, indépendamment les uns des autres, l'hydrogène, un groupe nitro, un halogène, un groupe alkyle en C1-C3, alcoxy en C1-C3 ou halogénoalkyle en C1-C3 ;

$R_5$ représente un groupe alkyle en C1-C4, phényle, un groupe phényle ou benzyle substitué par des halogènes ou des groupes méthyle ;

$R_4$ représente le groupe —$Si(R_{11})(R_{12})(R_{13})$ dans lequel $R_{11}$, $R_{12}$ et $R_{13}$ représentent chacun, indépendamment les uns des autres, un reste du groupe alkyle en C1-C4, alcényle en C3-C7 ou phényle éventuellement mono- ou poly-substitué par des halogènes ;
y compris leurs sels formés par addition avec des acides tolérés par les végétaux et leurs complexes de sels métalliques. .

3. Composés de formule I selon la revendication 1; dans lesquels X représente un pont —CH = ou = N— ; Ar représente un groupe phényle ; $R_1$, en position ortho, représente l'hydrogène, un groupe nitro, un halogène, un groupe alkyle en C1-C3, alcoxy en C1-C3 ou halogénoalkyle en C1-C3 ; $R_2$ en position para représente l'hydrogène, un groupe nitro, un halogène, un groupe alkyle en C1-C3, alcoxy en C1-C3 ou halogénoalkyle en C1-C3 ; $R_3$ représente l'hydrogène, un groupe méthyle ou un halogène ; R représente l'un des groupes

—$COOR_5$, —$COSR_6$, 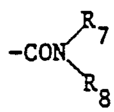

ou —CN ; $R_5$ représente un groupe alkyle en C1-C4, phényle, un groupe phényle substitué par des halogènes ou des groupes méthyle ou un groupe benzyle portant les mêmes substituants ; $R_6$ représente un groupe alkyle en C1-C10 ou un groupe phényle ou benzyle non substitué ou substitué par des halogènes, des groupes alkyle en C1-C4, alcoxy en C1-C4, —CN ou —$CF_3$, $R_7$ et $R_8$ représentent, indépendamment l'un de l'autre, l'hydrogène, un groupe alkyle en C1-C3, cycloalkyle en C3-C7, phényle ou benzyle ; et $R_4$ représente le groupe —$Si(R_{11})(R_{12})(R_{13})$ dans lequel $R_{11}$, $R_{12}$ et $R_{13}$ représentent des groupes alkyle en C1-C4 ou phényle éventuellement substitués par des halogènes ; leurs sels formés par addition avec des acides et leurs complexes de sels métalliques.

4. Composés de formule I selon la revendication 3, dans lesquels X représente le pont —N = ;

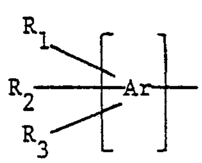

représente un groupe phényle substitué en position ortho et/ou para par des groupes nitro, le fluor, le chlore, le brome, des groupes méthyle, méthoxy et/ou $CF_3$ ; R représente le groupe —$COOR_5$ ; $R_5$ représente un groupe alkyle en C1-C6, phényle, un groupe phényle ou benzyle substitué par le chlore, le

brome, le fluor ou des groupes méthyle ; et $R_4$ représente le groupe —$Si(R_{11})(R_{12})(R_{13})$ dans lequel $R_{11}$, $R_{12}$ et $R_{13}$ représentent des groupes alkyle en C1-C4 ou phényle éventuellement substitués par des halogènes ; y compris leurs sels formés par addition avec des acides et complexes de sels métalliques.

5. Un composé de formule I selon la revendication 1, choisi dans le groupe suivant :

2-(1H-1,2,4-triazolylméthyl-1'-yl)-2-triméthyl-silyloxy-2-chloro-4-bromo-phénylacétate d'éthyle ;

2-(1H-1,2,4-triazolylméthyl-1'-yl)-2-triméthyl-silyloxy-2-chloro-4-bromophénylacétate de méthyle ;

2-(1H-1,2,4-triazolylméthyl-1'-yl)-2-triméthyl-silyloxy-2,4-dibromophénylacétate d'éthyle ;

2-(1H-1,2,4-triazolylméthyl-1'-yl)-2-triméthylsilyloxy-2,4-dichlorophénylacétate de méthyle ;

2-(1H-1,2,4-triazolylméthyl-1'-yl)-2-triméthylsilyloxy-2-chloro-4-bromophénylacétate d'éthyle ;

2-(1H-1,2,4-triazolylméthyl-1'-yl)-2-diméthylchlorométhylsilyloxy-2-chloro-4-bromophénylacétate de méthyle ;

2-(1H-1,2,4-triazolylméthyl-1'-yl)-2-triméthylsilyloxy-2,4-dichlorophénylacétate d'éthyle ;

2-(1H-1,2,4-triazolylméthyl-1'-yl)-2-triméthylsilyloxy-2,4-dichlorophénylacétate d'isopropyle ;

2-(1H-1,2,4-triazolylméthyl-1'-yl)-2-diméthyl-allyl-silyloxy-2-chloro-4-bromophényl-acétate d'éthyle.

6. Les complexes de sels métalliques des composés de formule I selon l'une des revendications 1 à 5 et des métaux cuivre, zinc, manganèse ou étain.

7. Procédé de préparation des silyloxyalcane-azoles de formule I définis dans la revendication 1, caractérisé en ce que l'on fait réagir un alcool de formule II

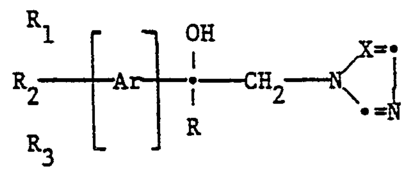

(II)

en présence ou en l'absence d'un solvant ou diluant organique inerte dans la réaction, à des températures de − 20 à + 150 °C et en présence d'une base organique ou minérale, avec un halogénosilane de formule III

$$Hal—R_4 \qquad (III)$$

les substituants des formules II et III ayant été définis en référence à la formule I et Hal représentant un atome d'halogène, et, si on le désire, on convertit un composé obtenu en un sel formé par addition avec un acide, on convertit un sel d'acide obtenu en le composé libre ou en un autre sel d'acide, ou bien on convertit un composé obtenu ou un sel obtenu en un complexe de sel métallique.

8. Produit pesticide conçu pour prévenir ou combattre une infestation par des microorganismes, caractérisé en ce qu'il contient au moins un composant actif constituant en un composé de formule I selon l'une des revendications 1 à 8, avec des véhicules.

9. Procédé pour prévenir ou combattre une infestation de végétaux cultivés par des microorganismes phytopathogènes, caractérisé en ce que l'on applique sur la plante ou son habitat un composé de formule I selon l'une des revendications 1 à 6.

10. Procédé de préparation d'un produit pesticide selon la revendication 8, caractérisé en ce que l'on mélange intimement au moins un composé de fomule I selon la revendication 1 avec des véhicules et/ou agents tensioactifs solides et/ou liquides appropriés.

**Revendications** (pour l'Etat contractant AT)

1. Produit pesticide conçu pour prévenir ou combattre les infestations par des microorganismes, caractérisé en ce qu'il contient, avec des véhicules usuels, au moins un composant actif consistant en un composé de formule I

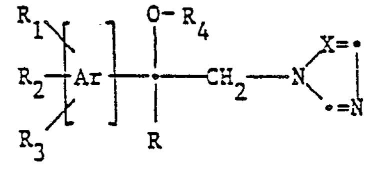

(I)

dans laquelle

X représente un pont —CH = ou —N = ;

Ar représente un groupe phényle, diphényle ou naphtyle ;

$R_1$, $R_2$ et $R_3$ représentent chacun, indépendamment les uns des autres, l'hydrogène, un groupe nitro, un halogène, un groupe alkyle en C1-C3, alcoxy en C1-C3 ou halogénoalkyle en C1-C3 ;

R représente l'un des groupes

—$COOR_5$, —$COSR_6$, 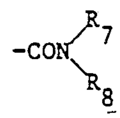

ou —CN ;

$R_5$ représente un groupe alcényle en C2-C10 non substitué ou substitué par des halogènes ; un groupe alcynyle en C2-C10 non substitué ou substitué par des halogènes ; ou un groupe cycloalkyle en C3-C8 ou un groupe phényle non substitué ou substitué par des halogènes, des groupes alkyle en C1-C4, alcoxy en C1-C4, —CN ou —$CF_3$ ; ou encore une chaîne alkyle en C1-C12 qui, à partir de la chaîne alkyle en C2, peut être interrompue par l'oxygène ou le soufre et qui peut être non substituée ou substituée par l'un des atomes ou groupes suivants : halogène, phényle, —COO(alkyle en C1-C4), —CO(alkyle en C1-C4), —CO-phényle, un cycle insaturé ou saturé à 5 ou 6 chaînons contenant l'oxygène ou le soufre en tant qu'hétéroatome, chaque groupe phényle étant non substitué ou mono- ou poly-substitué par des atomes d'halogènes identiques ou différents ;

$R_6$ représente un groupe alkyle en C1-C10 ou un groupe phényle ou benzyle non substitué ou substitué par des halogènes, des groupes alkyle en C1-C4, alcoxy en C1-C4, —CN ou —$CF_3$ ;

$R_7$ et $R_8$ représentent chacun, indépendamment l'un de l'autre, l'hydrogène, un groupe alkyle en C1-C6, cycloalkyle en C3-C7 ou un groupe phényle ou benzyle dans lesquels le cycle aromatique peut être non substitué ou substitué par des halogènes, des groupes alkyle en C1-C4, alcoxy en C1-C4, —CN ou —$CF_3$, ou bien l'un des symboles $R_7$ ou $R_8$ représente le groupe —$N(R_9)(R_{10})$ ou bien les symboles $R_7$ et $R_8$ représentent ensemble un noyau hétérocyclique saturé ou insaturé à 5 ou 6 chaînons qui peut encore contenir un ou deux autres atomes d'azote ;

$R_9$ et $R_{10}$ représentent chacun, indépendamment l'un de l'autre, l'hydrogène, un groupe alkyle en C1-C4 ou phényle non substitué ou substitué par des halogènes, des groupes alkyle en C1-C4, —CN ou —$CF_3$ ; et

$R_4$ représente le groupe —$Si(R_{11})(R_{12})(R_{13})$ dans lequel $R_{11}$, $R_{12}$ et $R_{13}$ représentent chacun, indépendamment les uns des autres, un reste du groupe alkyle en C1-C4, alcényle en C3-C7 ou phényle éventuellement mono- ou poly-substitué par des halogènes ; ainsi que leurs sels formés par addition avec des acides et complexes de sels métalliques.

2. Produit selon la revendication 1, contenant en tant que composant actif un composé de formule I*

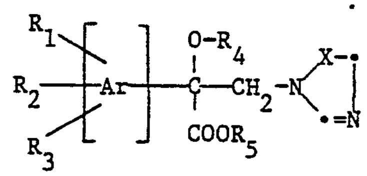

(I*),

dans laquelle

X représente le pont —CH = ou —CN = ;

Ar représente un groupe phényle, diphényle ou naphtyle ;

$R_1$, $R_2$ et $R_3$ représentent chacun, indépendamment les uns des autres, l'hydrogène, un groupe nitro, un halogène, un groupe alkyle en C1-C3, alcoxy en C1-C3 ou halogénoalkyle en C1-C3 ;

$R_5$ représente un groupe alkyle en C1-C4, phényle, un groupe phényle ou benzyle substitué par des halogènes ou des groupes méthyle ;

$R_4$ représente le groupe —$Si(R_{11})(R_{12})(R_{13})$ dans lequel $R_{11}$, $R_{12}$ et $R_{13}$ représentent chacun, indépendamment les uns des autres, un reste du groupe alkyle en C1-C4, alcényle en C3-C7 ou phényle éventuellement mono- ou poly-substitué par des halogènes ;

y compris leurs sels formés par addition avec des acides tolérés par les végétaux et leurs complexes de sels métalliques.

3. Produit selon la revendication 1 contenant en tant que composant actif un composé de formule I dans laquelle X représente un pont —CH = ou = N— ; Ar représente un groupe phényle ; $R_1$, en position ortho, représente l'hydrogène, un groupe nitro, un halogène, un groupe alkyle en C1-C3, alcoxy en C1-C3 ou halogénoalkyle en C1-C3 ; $R_2$ en position para représente l'hydrogène, un groupe nitro, un halogène, un groupe alkyle en C1-C3, alcoxy en C1-C3 ou halogénoalkyle en C1-C3 ; $R_3$ représente l'hydrogène, un groupe méthyle ou un halogène ; R représente l'un des groupes

—$COOR_5$, —$COOR_6$, 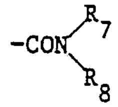

où —CN ; $R_5$ représente un groupe alkyle en C1-C4, phényle, un groupe phényle substitué par des

halogènes ou des groupes méthyle ou un groupe benzyle portant les mêmes substituants ; $R_6$ représente un groupe alkyle en C1-C10 ou un groupe phényle ou benzyle non substitué ou substitué par des halogènes, des groupes alkyle en C1-C4, alcoxy en C1-C4, —CN ou —$CF_3$, $R_7$ et $R_8$ représentent, indépendamment l'un de l'autre, l'hydrogène, un groupe alkyle en C1-C3, cycloalkyle en C3-C7, phényle ou benzyle ; et $R_4$ représentent des groupes alkyle en C1-C3, cycloalkyle en C3-C7, phényle ou benzyle ; et $R_4$ représente le groupe —$Si(R_{11})(R_{12})(R_{13})$ dans lequel $R_{11}$, $R_{12}$ et $R_{13}$ représentent des groupes alkyle en C1-C4 ou phényle éventuellement substitués par des halogènes ; leurs sels formés par addition avec des acides et leurs complexes de sels métalliques.

4. Produit selon la revendication 3 contenant en tant que composant actif un composé de formule I dans laquelle X représente le groupe —N = ;

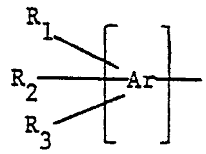

représente un groupe phényle substitué en position ortho et/ou para par des groupes nitro, le fluor, le chlore, le brome, des groupes méthyle, méthoxy et/ou $CF_3$ ; R représente le groupe —$COOR_5$ ; $R_5$ représente un groupe alkyle en C1-C6, phényle, un groupe phényle ou benzyle substitué par le chlore, le brome, le fluor ou des groupes méthyle ; et $R_4$ représente le groupe —$Si(R_{11})(R_{12})(R_{13})$ dans lequel $R_{11}$, $R_{12}$ et $R_{13}$ représentent des groupes alkyle en C1-C4 ou phényle éventuellement substitué par des halogènes, y compris leurs sels formés par addition avec des acides, leurs sels d'azolium et d'ammonium quaternaires et complexes métalliques de formule I.

5. Produit selon la revendication 1, contenant en tant que composant actif l'un des composés de formule I énumérés ci-après, à savoir :

2-(1H-1,2,4-triazolylméthyl-1'-yl)-2-triméthyl-silyloxy-2-chloro-4-bromo-phénylacétate d'éthyle ;

2-(1H-1,2,4-triazolylméthyl-1'-yl)-2-triméthyl-silyloxy-2-chloro-4-bromophénylacétate de méthyle ;

2-(1H-1,2,4-triazolylméthyl-1'-yl)-2-triméthyl-silyloxy-2,4-dibromophénylacétate d'éthyle ;

2-(1H-1,2,4-triazolylméthyl-1'-yl)-2-triméthylsilyloxy-2,4-dichlorophénylacétate de méthyle ;

2-(1H-1,2,4-triazolylméthyl-1'-yl)-2-triméthylsilyloxy-2-chloro-4-bromophénylacétate d'éthyle ;

2-(1H-1,2,4-triazolylméthyl-1'-yl)-2-diméthylchlorométhylsilyloxy-2-chloro-4-bromophénylacétate de méthyle ;

2-(1H-1,2,4-triazolylméthyl-1'-yl)-2-triméthylsilyloxy-2,4-dichlorophénylacétate d'éthyle ;

2-(1H-1,2,4-triazolylméthyl-1'-yl)-2-triméthylsilyloxy-2,4-dichlorophénylacétate d'isopropyle ;

2-(1H-1,2,4-triazolylméthyl-1'-yl)-2-diméthyl-allyl-silyloxy-2-chloro-4-bromophényl-acétate d'éthyle.

6. Les complexes de sels métalliques de formule I selon l'une des revendications 1 à 7, des métaux cuivre, zinc, manganèse ou étain.

7. Procédé de préparation des silyloxyalcane-azoles de formule I selon la revendication 1, caractérisé en ce que l'on fait réagir un alcool de formule II

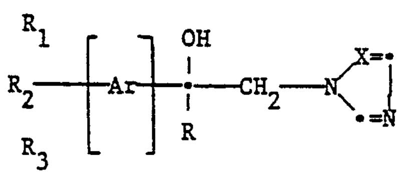

(II)

en présence ou en l'absence d'un solvant ou diluant organique inerte dans la réaction, à des températures de − 20 à + 150 °C et en présence d'une base organique ou minérale, avec un halogénosilane de formule III

$$Hal—R_4 \quad (III)$$

les substituants des formules II et III ayant été définis en référence à la formule I et Hal représentant un atome d'halogène, et, si on le désire, on convertit un composé obtenu en un sel formé par addition avec un acide, on convertit un sel d'acide obtenu en le composé libre ou en un autre sel d'acide, ou bien on convertit un composé obtenu ou un sel obtenu en un complexe de sel métallique.

8. Procédé pour prévenir ou combatre une infestation de végétaux cultivés par des microorganismes phytopathogènes, caractérisé en ce que l'on applique sur la plante ou son habitat un composé de formule I selon l'une des revendications 1 à 6.

9. Procédé de préparation d'un produit pesticide selon la revendication 1, caractérisé en ce que l'on mélange intimement au moins un composé de formule 1 selon la revendication 1 avec des véhicules et/ou agents tensioactifs solides et/ou liquides appropriés.